# EUROPÄISCHE PATENTSCHRIFT

(11) **EP 3 907 838 B1**
(45) Veröffentlichungstag und Bekanntmachung des Hinweises auf die Patenterteilung: **27.03.2024**
(21) Anmeldenummer: 20214506.6
(22) Anmeldetag: 16.12.2020
(51) Int. Cl.: H02B 1/28, H02G 3/08, H02B 1/56, H02B 1/38

(54) **VERTEILER- UND/ODER BRANDSCHUTZGEHÄUSE, BRANDSCHUTZEINRICHTUNG UND BAUSATZ FÜR EIN VERTEILER- UND/ODER BRANDSCHUTZGEHÄUSE**
DISTRIBUTION AND / OR FIRE PROTECTION HOUSING, FIRE PROTECTION DEVICE AND KIT FOR A DISTRIBUTION AND / OR FIRE PROTECTION HOUSING
BOITIER DE DISTRIBUTEUR ET/OU DE PROTECTION CONTRE LES INCENDIES, DISPOSITIF DE PROTECTION CONTRE LES INCENDIES ET ENSEMBLE POUR UN BOITIER DE DISTRIBUTEUR ET/OU DE PROTECTION CONTRE LES INCENDIES

(30) Priorität: 08.05.2020 DE 102020112493
(43) Veröffentlichungstag der Anmeldung: 10.11.2021
(73) Patentinhaber: Müller-Otto, Jens, 08427 Fraureuth (DE); Bäuerlein, Florian, 63526 Erlensee (DE)
(72) Erfinder: Müller-Otto, Jens, 08427 Fraureuth (DE); Bäuerlein, Florian, 63526 Erlensee (DE)
(74) Vertreter: Steiniger, Carmen

(56) Entgegenhaltungen:
- DE-A1-102017 102 682
- DE-U1-202004 019 510
- DE-U1-202013 007 294

## Beschreibung

Die vorliegende Erfindung betrifft zum einen ein Verteiler- und/oder Brandschutzgehäuse mit einem Korpus, der wenigstens eine Korpuswand aufweist, die wenigstens teilweise aus einem Plattenverbund aus wenigstens drei Platten ausgebildet ist, wobei eine äußere dieser Platten, die eine Außenseite des Verteiler- und/oder Brandschutzgehäuses bildet, aus wenigstens einer Gipsfaserplatte ausgebildet ist. Die Erfindung betrifft ferner eine Brandschutzeinrichtung mit einem Verteiler- und/oder Brandschutzgehäuse. Darüber hinaus betrifft die Erfindung einen Bausatz für ein Verteiler- und/oder Brandschutzgehäuse, aufweisend mehrere miteinander verbindbare Korpuswände und/oder Korpuswandelemente, wobei wenigstens eine(s) der Korpuswände und/oder Korpuswandelemente aus einem Plattenverbund aus wenigstens drei Platten ausgebildet ist, wobei eine äußere dieser Platten aus wenigstens einer Gipsfaserplatte ausgebildet ist.

Aus der Druckschrift EP 3 503 320 A1 ist ein Brandschutzschrank mit einem mehrere Korpuswände aufweisenden Korpus bekannt. Die Korpuswände bestehen aus mittels selbstzentrierendem Formschluss zueinander ausrichtbaren und mit Nut-Feder-Elementen verbindbaren Korpuselementen, sodass der Brandschutzschrank reproduzierbar und spaltfrei vor Ort aufgebaut werden kann. Die Korpuselemente bestehen jeweils aus einem Plattenverbund von drei Platten. Dabei sind die drei Platten Brandschutzplatten, wobei in einem Beispiel die beiden äußeren Platten Gipsfaserplatten und die mittlere Platte eine Kalziumsilikatplatte ist. Alternativ wird als Plattenmaterial das eher selten vorkommende Schichtsilikat Vermiculit erwähnt.

In der Druckschrift DE 10 2017 102 682 A1 ist ein Brandschutzgehäuse mit einer Gehäusewand beschrieben, die von außen beginnend betrachtet zunächst eine wasserhaltige Schicht, dann mittig eine faserhaltige Schicht und danach eine die Innenseite der Gehäusewand bildende wasseraufnehmende Schicht aufweist. Als wasserhaltige Schicht wird ein nichtbrennbarer Plattenbaustoff vorgeschlagen. Als faserhaltige Schicht soll vorzugsweise Mineralwolle verwendet werden. Mit der an der Innenseite des Brandschutzgehäuses vorgesehenen wasseraufnehmenden Schicht soll im Brandfall die Luftfeuchtigkeit im Brandschutzgehäuse durch Aufnahme von Wasser reguliert werden.

Die Druckschrift DE 201 16 667 U1 beinhaltet ein Brandschutzgehäuse, in dem eine sicherheitstechnische Anlage aufgenommen ist und das Be- und Entlüftungsöffnungen aufweist. An diesen Öffnungen sind Brandschutzdichtungen vorgesehen, die aus einem im Brandfall aufschäumenden und die Öffnungen hierdurch verschließenden Material ausgebildet sind. Dadurch bleibt die sicherheitstechnische Anlage auch im Brandfall noch eine gewisse Zeit funktionstüchtig.

Eine noch längere Funktionstüchtigkeit einer sich in deinem Brandschutzgehäuse befindlichen sicherheitstechnischen Anlage im Brandfall ist durch die in der Druckschrift DE 10 2015 119 624 A1 offenbarte Brandschutzeinrichtung möglich. Diese Brandschutzeinrichtung weist ein Brandschutzgehäuse auf, in dem eine sicherheitstechnische Anlage aufgenommen ist und das eine Be- und eine Entlüftungsöffnung aufweist, die auch im Brandfall unverschlossen sind. Ansonsten ist das Brandschutzgehäuse vollständig abgedichtet. Die Be- und die Entlüftungsöffnungen sind jeweils mit einem Be- bzw. Entlüftungskanal verbunden, der jeweils in einen anderen, feuerwiderstandsfähigen Raum mündet. So kann das Brandschutzgehäuse trotz dessen Abdichtung auch während eines Brandfalles be- und entlüftet bleiben und die darin befindliche sicherheitstechnische Anlage auch im Brandfall für geraume Zeit bestimmungsgemäß weiter betrieben werden.

Die Druckschrift DE 10 2017 102 304 A1 schlägt vor, an einem Brandschutzgehäuse eine Klimatisierungsvorrichtung vorzusehen. In einem Brandfall wird durch Sensoren eine erhöhte Temperatur im Brandschutzgehäuse detektiert. Mittels eines Lüfters wird daraufhin warme Luft aus dem Gehäuse über eine Lufteintrittsöffnung durch die Klimatisierungsvorrichtung gefördert. Dabei wird die Luft entfeuchtet und abgekühlt und danach wieder über eine Luftaustrittsöffnung in das Gehäuse geleitet. Zur Luftentfeuchtung wird beispielsweise Zeolith in granularer Form verwendet. Zur Luftabkühlung kommt ein Phasenwechselmaterial zum Einsatz. Diese Materialien können in einer Schublade vorgesehen sein, um sie leicht austauschen zu können.

Die Druckschrift DE 10 2013 111 371 B4 beschreibt ein Brandschutzgehäuse für eine Leitungsanlage. Die Leitungen der Leitungsanlage sind durch eine oben am Brandschutzgehäuse vorgesehene Brandabschottung und einen darauf gesetzten Kanal nach außen geführt. Die Wandung des Kanals ist aus feuerhemmendem Material mit einer bei hohen Temperaturen selbstständig aufschäumenden Innenbeschichtung ausgebildet.

Diese Innenbeschichtung schäumt im Brandfall so stark auf, dass die Leitungen zumindest angrenzend an die Brandabschottung vollständig umhüllt sind. Die Brandabschottung selbst ist im Bereich der Leitungsdurchführung aus einem rauchdichten, feuerhemmenden elastischen Schaumstoff, in den Schläuche zur Aufnahme der Leitungen geführt sind, ausgebildet. Die Schläuche umschließen die Leitungen rauchdicht und sind im unbelegten Zustand rauchdicht.

Aus der Druckschrift DE 20 2004 019 510 U1 ist ein Brandschutzschrank bekannt, dessen Umkleidungselemente jeweils einen brandschutzsicheren Wandaufbau aus mehreren Schichten aufweisen. Der Brandschutzschrank weist wenigstens eine Kabeldurchführung auf, die selbst geschichtet aufgebaut ist und einen mit Stützmaterial und Durchführungsöffnungen versehenen Kabeldurchführungsinnenkörper aufweist. Zumindest die Außenseite des Kabeldurchführungsinnenkörpers ist mit einer Brandschutzschaumschicht und einem äußeren Bausteinblech bedeckt.

Die Druckschrift DE 20 2013 007 294 U1 beschreibt einen feuerhemmenden Revisionsverschluss zur Aufputz-Montage, der ein Türblatt und eine zum Türblatt passgenaue Zarge aufweist. Das Türblatt als auch die Zarge sind jeweils aus zwei flächig miteinander verbundenen Platten ausgebildet. Die Platten des Türblattes weisen unterschiedliche Abmessungen auf und sind derart aneinander gefügt, dass sich ein das Türblatt umlaufender Stufenfalz ergibt. Die Zarge weist einen dazu passgenauen Stufenfalz auf, wodurch der Spalt zwischen Türblatt und Zarge einen stufenförmigen Verlauf erhält.

Es ist die Aufgabe der vorliegenden Erfindung, ein Verteiler- und/oder Brandschutzgehäuse und eine damit ausgebildete Brandschutzeinrichtung mit einem besonders hohen Feuerwiderstand zur Verfügung zu stellen. Ferner soll ein Bausatz vorgeschlagen werden, mit dem das Verteiler- und/oder Brandschutzgehäuse vor Ort aufgebaut werden kann.

Die erstgenannte Aufgabe wird erfindungsgemäß durch ein Verteiler- und/oder Brandschutzgehäuse mit einem Korpus, der wenigstens eine Korpuswand aufweist, die wenigstens teilweise aus einem Plattenverbund aus wenigstens drei Platten ausgebildet ist, wobei eine äußere dieser Platten, die eine Außenseite des Elektroverteilerschrankes bildet, aus wenigstens eine Gipsfaserplatte ausgebildet ist, gelöst, wobei der Plattenverbund wenigstens eine auf einer Innenseite der wenigstens einen Gipsfaserplatte angeordnete Mineralfaserplatte und wenigstens eine auf einer Innenseite der wenigstens einen Mineralfaserplatte angeordnete und einem Innenraum des Verteiler- und/oder Brandschutzgehäuses zugewandte Kalziumsilikatplatte aufweist, wobei eine der aus dem Plattenverbund ausgebildeten Korpuswände als eine Tür ausgebildet ist, an die eine auch aus dem Plattenverbund ausgebildete Korpuswand angrenzt, wobei diese Plattenverbünde an ihren Enden jeweils stufen- oder treppenartig ausgebildet sind, wobei sich eine innere bei Überschreitung eines Temperaturschwellenwertes selbstständig aufschäumende Dichtung an einer Seitenkante der Kalziumsilikatplatte der Tür befindet, sich eine mittlere bei Überschreitung eines Temperaturschwellenwertes selbstständig aufschäumende Dichtung an einer Seitenkante der Mineralfaserplatte der Tür befindet, und sich eine äußere bei Überschreitung eines Temperaturschwellenwertes selbstständig aufschäumende Dichtung an einer Seitenkante der Gipsfaserplatte der Tür befindet.

Der durch den bei dem erfindungsgemäßen Verteiler- und/oder Brandschutzgehäuse zum Aufbau der wenigstens einen Korpuswand verwendeten Plattenverbund genutzte Sandwichaufbau wirkt besonders wärmeisolierend.

Darüber hinaus ist der erfindungsgemäß verwendete Sandwichaufbau der wenigstens einen Korpuswand besonders gut elektrisch isolierend, sodass sich das erfindungsgemäße Verteiler- und/oder Brandschutzgehäuse sehr gut für die Aufnahme elektrischer Anlagen eignet.

Die wenigstens eine, aus einem solchen Plattenverbund ausgebildete Korpuswand besitzt durch das Material und die Anordnung ihrer Platten eine Summe von Vorteilen.

Die sich am weitesten innen befindliche, also zum Innenraum Verteiler- und/oder Brandschutzgehäuses gewandte und damit eine Innenwandoberfläche des Verteiler- und/oder Brandschutzgehäuses bildende Kalziumsilikatplatte kann Wasser aufnehmen und auch wieder abgeben. Sie wirkt damit sowohl als dämmende als auch als den Innenraum des Verteiler- und/oder Brandschutzgehäuses klimatisierende Platte. Die Kalziumsilikatplatte nimmt beispielsweise in einem Brandfall Dämpfe und Flüssigkeiten auf, die von in den Innenraum des Verteiler- und/oder Brandschutzgehäuse eingeführten Kabeln beim Abbrand der Kabel entstehen und/oder von den weiter außen befindlichen Platten des Plattenverbundes ausgehen.

Letzteres ergibt sich dadurch, dass sich in einem Brandfall innerhalb des Verteiler- und/oder Brandschutzgehäuses ein Unterdruck ausbildet. Es ist also im Brandfall außerhalb des Verteiler- und/oder Brandschutzgehäuses ein höherer Druck als innerhalb des Verteiler- und/oder Brandschutzgehäuses vorhanden. Dadurch ergibt sich eine Sogwirkung für Dämpfe in Richtung des Inneren des Verteiler- und/oder Brandschutzgehäuses.

Die sich innen in dem Plattenverbund befindende wenigstens eine Mineralfaserplatte wirkt als Dämmschicht.

Die wenigstens eine am weitesten außen im Plattenverbund angeordnete Gipsfaserplatte enthält kristallin gebundenen Gips, aus dem oberhalb einer bestimmten Temperatur Wasser abgegeben wird. Umgekehrt hat die wenigstens eine Gipsfaserplatte eine relativ hohe Dichte und kann daher nur schlecht Feuchtigkeit aufnehmen. Die wenigstens eine Gipsfaserplatte setzt somit in einem Brandfall Feuchtigkeit frei und kühlt hierdurch das Verteiler- und/oder Brandschutzgehäuse.

Diese Eigenschaften ergeben sich auch dann, wenn die jeweils verwendete Gipsfaserplatte eine Kunststoffbeschichtung aufweist, die typischerweise für deren bessere Haltbarkeit beim Transport und der weiteren Handhabung notwendig ist. Im Brandfall brennt eine solche Kunststoffbeschichtung schnell weg, wodurch dann die Oberfläche der Gipsfaserfaserplatte frei ist und die Gipsfaserplatte Feuchtigkeit freisetzen kann.

Im Brandfall bleiben die beiden inneren Platten, das heißt die wenigstens eine Kalziumsilikatplatte als auch die wenigstens eine Mineralfaserplatte, relativ lange Zeit in ihrer Form und schützen somit die in dem Verteiler- und/oder Brandschutzgehäuse befindliche Anlage. Die sich außen befindende wenigstens eine Gipsfaserplatte ändert zwar durch die temperaturbedingte Wasserabgabe mit der Zeit ihre Form, dies ist jedoch aufgrund der mechanischen Beständigkeit der beiden inneren Platten unkritisch.

Das erfindungsgemäße Verteiler- und/oder Brandschutzgehäuse weist durch seine Merkmale einen hohen Feuerwiderstand auf, sodass auch in einem Brandfall der Betrieb von elektrischen Komponenten im Innenraum des Verteiler- und/oder Brandschutzgehäuse über relativ lange Zeit aufrechterhalten werden kann und Brandlasten eingedämmt werden können.

Ein besonderer Vorteil des erfindungsgemäßen Verteiler- und/oder Brandschutzgehäuses besteht in seinem geringen Gewicht, sodass es leicht vor Ort installiert werden kann. Das erfindungsgemäße Verteiler- und/oder Brandschutzgehäuse ist mindestens 30 % leichter als bekannte Verteiler- und/oder Brandschutzgehäuse.

Der gesamte Plattenverbund weist bei der vorliegenden Erfindung einen Feuerwiderstand von wenigstens 60 Minuten auf, wobei die maximale Temperaturerhöhung auf der brandabgewandten Seite des Plattenverbundes so gering ist, dass im Brandfall von außen im Innenraum des Verteiler- und/oder Brandschutzgehäuses eingebaute elektrische Komponenten wenigstens während dieses Zeitraumes funktionstüchtig bleiben.

Wenn ein noch höherer Feuerwiderstand erreicht werden soll, kann dies bei der vorliegenden Erfindung durch eine erhöhte Plattendicke und/oder eine erhöhte Plattenanzahl der wenigstens einen Gipsfaserplatte ermöglicht werden. So können beispielsweise an der Außenseite des Verteiler- und/oder Brandschutzgehäuses zwei oder auch drei übereinander liegende Gipsfaserplatten eingesetzt werden.

In einer bevorzugten Ausführungsform der vorliegenden Erfindung weist die wenigstens eine Korpuswand einen in den Plattenverbund eingebauten oder an den Plattenverbund direkt angrenzenden Schott auf, der aus wenigstens einer Mineralfaserplatte ausgebildet ist.

Der in die wenigstens eine Korpuswand integrierte Schott bildet eine brandgeschützte Leitungsdurchführung. Die Leitungen werden durch die wenigstens eine Mineralfaserplatte durchgestoßen. Dadurch sind diese Leitungen an der Durchstoßstelle vollumfänglich von dem Mineralfaserplattenmaterial umgeben, sodass in einem Brandfall Feuer nicht an der Leitungsdurchführungsstelle durchschlagen kann.

Bei diesem Schott weist die wenigstens eine Mineralfaserplatte vorzugsweise keine Beschichtung, insbesondere keine Beschichtung mit einem bei hohen Temperaturen aufschäumenden Material, auf. Die wenigstens eine Mineralfaserplatte besteht vorteilhafterweise aus einem Mineralfaserelement 1000 °C ohne weitere ablative oder intumeszierenden Bestandteile. Somit gibt es auch keine unerwünschten Wechselwirkungen zwischen einer solchen Beschichtung bzw. solchen weiteren Bestandteilen und den durch die wenigstens eine Mineralfaserplatte durchgeführten Kabeln bzw. Leitungen. Dadurch ist eine uneingeschränkte Kabelbelegung möglich.

Als Material für die wenigstens eine Mineralfaserplatte für die Ausbildung des Schotts kann wenigstens eine Steinwollplatte eingesetzt werden. Dieses Material lässt sich leicht durchstoßen und weist sehr gute Wärmedämmeigenschaften und ist nicht brennbar.

In einer weiteren vorteilhaften Ausführungsform der vorliegenden Erfindung ist zwischen der Tür und einer daran angrenzenden, auch aus dem Plattenverbund ausgebildeten Korpuswand eine Türdichtung ausgebildet, die aus einer Kombination aus einer inneren Rauchschutzdichtung, einer dazu versetzt angeordneten, äußeren Rauchschutzdichtung, und den drei versetzt zueinander angeordneten und bei Überschreitung eines Temperaturschwellenwertes selbstständig aufschäumenden Dichtungen ausgebildet ist, wobei die innere selbstständig aufschäumende Dichtung weiter innen als die innere Rauchschutzdichtung angeordnet ist, die mittlere selbstständig aufschäumende Dichtung zwischen der inneren Rauchschutzdichtung und der äußeren Rauchschutzdichtung angeordnet ist und die äußere selbstständig aufschäumende Dichtung weiter außen als die äußere Rauchschutzdichtung angeordnet ist.

Die Rauchschutzdichtungen als auch die selbstständig aufschäumenden Dichtungen sind vorzugsweise nur an der Tür vorgesehen.

Die Rauchschutzdichtungen sind vorzugsweise als Dichtungslippen ausgebildet.

Diese mehrstufige Türdichtung erfüllt zwei Funktionen: Zum einen schützt sie den Innenraum des Verteiler- und/oder Brandschutzgehäuses bei einem Brand von außen, indem in einem solchen Brandfall die jeweils sich durch die Außenhitze ausdehnenden äußeren und mittleren selbstständig aufschäumenden Dichtungen im Zusammenwirken mit der inneren Rauchschutzdichtung den Innenraum des Verteiler- und/oder Brandschutzgehäuses vor Temperatur- und/oder Feuchtigkeitseintritt in diesen schützen. Desweiteren schützt die Türdichtung bei einem Brand von innen, indem in einem derartigen Brandfall die dann sich ausdehnende innere selbstständig aufschäumende Dichtung im Zusammenwirken mit der äußeren Rauchschutzdichtung die Umgebung des Verteiler- und/oder Brandschutzgehäuses vor einem Temperatur- und/oder Rauchaustritt aus dem Verteiler- und/oder Brandschutzgehäuse schützt.

Um im Normalbetrieb eine Innenbelüftung des Verteiler- und/oder Brandschutzgehäuses zu realisieren, führt vorzugsweise durch die wenigstens eine Korpuswand wenigstens ein Lüftungskanal und/oder grenzt wenigstens ein Lüftungskanal an eine Platte des Plattenverbundes direkt an. Vorzugsweise ist dadurch eine Belüftung des Verteiler- und/oder Brandschutzgehäuses bis zu IP44 möglich.

In einer Ausführungsform der vorliegenden Erfindung ist in dem wenigstens einen Lüftungskanal innen und/oder an dem wenigstens einen Lüftungskanal außen jeweils ein bei Überschreitung eines Temperaturschwellenwertes selbstständig aufschäumendes Material angeordnet.

Das sich in dem Inneren des jeweiligen Lüftungskanals befindende, bei Überschreitung eines Temperaturschwellenwertes selbstständig aufschäumende Material schäumt bei einem Brandfall im Innenraum des Verteiler- und/oder Brandschutzgehäuses auf, breitet sich innerhalb des jeweiligen Lüftungskanals aus und verschließt hierdurch den wenigstens einen Lüftungskanal, sodass Feuer und/oder Rauch nicht nach außen gelangen können. Das sich außen an dem jeweiligen Lüftungskanal befindende, bei Überschreitung eines Temperaturschwellenwertes selbstständig aufschäumende Material schäumt bei einem Brandfall von außen auf und schützt dadurch den Innenraum des Verteiler- und/oder Brandschutzgehäuses vor eindringender Hitze und Rauch. Dadurch steht bei dieser Ausführungsform der Erfindung ein Belüftungssystem mit Brand- und Rauchschutzfunktion zur Verfügung.

Vorzugsweise ist die Wandstärke der wenigstens einen Korpuswand dort, wo der jeweilige Lüftungskanal durch die wenigstens eine Korpuswand verläuft, gleich der Wandstärke der wenigstens einen Korpuswand im Bereich des Plattenverbundes und ist der jeweilige Lüftungskanal zwischen der wenigstens einen Gipsfaserplatte und der wenigstens einen Kalziumsilikatplatte des Plattenverbundes angeordnet ist.

In einer favorisierten Ausführungsform des erfindungsgemäßen Verteiler- und/oder Brandschutzgehäuses weist der wenigstens eine Lüftungskanal wenigstens einen als Zuluftkanal genutzten und mit einem Lüfter verbundenen Lüftungskanal, zwischen dem und dem Lüfter wenigstens eine klappbare erste Rauchschutzlippe hängt, und wenigstens einen weiteren, als Abluftkanal genutzten Lüftungskanal auf, auf dessen als Abluftöffnung genutzten oberem Ende wenigstens eine klappbare zweite Rauchschutzlippe aufliegt.

Die erste und die zweite Rauchschutzlippe ermöglichen, dass bei einem Brand im Inneren des Verteiler- und/oder Brandschutzgehäuses kein Kaltrauch aus dem Innenraum des Verteiler- und/oder Brandschutzgehäuses nach außen gelangt. Besonders vorteilhaft ist dabei, dass die erste Rauchschutzlippe und die zweite Rauchschutzlippe rein mechanisch, schwerkraftbedingt funktionieren.

Vorzugsweise ist hierfür der Lüfter, der prinzipiell Luft drückend in das Verteiler- und/oder Brandschutzgehäuse leitet, mit einem in dem Innenraum des Verteiler- und/oder Brandschutzgehäuses vorgesehenen Brandschutzmelder verbunden.

Das Innere des Verteiler- und/oder Brandschutzgehäuses kann jedoch auch noch im Brandfall für eine gewisse Zeit belüftet werden, wenn in einer Brandschutzeinrichtung, die eine Ausführungsform des erfindungsgemäßen Verteiler- und/oder Brandschutzgehäuse aufweist, bei der wenigstens ein Lüftungskanal durch die wenigstens eine Korpuswand führt, der wenigstens eine Lüftungskanal mit einer Lüftungsanlage verbunden ist, die in einen von dem Raum, in dem sich das Verteiler- und/oder Brandschutzgehäuse befindet, brandschutztechnisch getrennten Raum mündet.

So kann das Innere des Verteiler- und/oder Brandschutzgehäuses auch im Brandfall mit nicht erhitzter Frischluft, beispielsweise aus einem Nachbarraum, belüftet werden und warme Brauchluft als auch Luftfeuchtigkeit in diesen Nachbarraum abgeleitet werden. Somit kann das Innere des Verteiler- und/oder Brandschutzgehäuses noch geraume Zeit gekühlt werden, sodass in dem Verteiler- und/oder Brandschutzgehäuse enthaltene Installationen für diese Zeit unbeschädigt bleiben.

In einer vorteilhaften Ausführungsform dieser Brandschutzeinrichtung verläuft der wenigstens eine Lüftungskanal durch eine der Korpuswände, die eine Decke des Verteiler- und/oder Brandschutzgehäuses bildet. Der wenigstens eine, im Deckenteil des Verteiler- und/oder Brandschutzgehäuses jeweils als Zuluftzuführung oder als Abluftabführung genutzte Lüftungskanal ist auch dann besonders leicht anschließbar, wenn das Verteiler- und/oder Brandschutzgehäuse an einer Wand aufgehängt wird oder ein Standgehäuse ist.

Die Aufgabe wird ferner durch einen Bausatz für ein Verteiler- und/oder Brandschutzgehäuse, aufweisend mehrere miteinander verbindbare Korpuswände und/oder Korpuswandelemente, wobei wenigstens eine(s) der Korpuswände und/oder Korpuswandelemente aus einem Plattenverbund aus wenigstens drei Platten ausgebildet ist, wobei eine äußere dieser Platten aus wenigstens einer Gipsfaserplatte ausgebildet ist, gelöst, bei dem der Plattenverbund wenigstens eine auf einer Innenseite der wenigstens einen Gipsfaserplatte angeordnete Mineralfaserplatte und wenigstens eine auf einer Innenseite der wenigstens einen Mineralfaserplatte angeordnete Kalziumsilikatplatte aufweist, wobei eine der aus dem Plattenverbund ausgebildeten Korpuswände und/oder Korpuswandelemente als eine Tür ausgebildet ist, an die eine auch aus dem Plattenverbund ausgebildete Korpuswand angrenzt, wobei diese Plattenverbünde an ihren Enden jeweils stufen- oder treppenartig ausgebildet sind, wobei sich eine innere bei Überschreitung eines Temperaturschwellenwertes selbstständig aufschäumende Dichtung an einer Seitenkante der Kalziumsilikatplatte der Tür befindet, sich eine mittlere bei Überschreitung eines Temperaturschwellenwertes selbstständig aufschäumende Dichtung an einer Seitenkante der Mineralfaserplatte der Tür befindet, und sich eine äußere bei Überschreitung eines Temperaturschwellenwertes selbstständig aufschäumende Dichtung an einer Seitenkante der Gipsfaserplatte der Tür befindet.

Wie oben bereits ausgeführt, ist durch die Kombination der Platten in dem Plattenverbund ein hoher Grad an Wärmedämmung erreichbar. Darüber hinaus sind die einzelnen Bestandteile des Verteiler- und/oder Brandschutzgehäuses und damit auch das Verteiler- und/oder Brandschutzgehäuse selbst relativ leicht. So kann beispielsweise die wenigstens eine, außen am Plattenverbund befindliche Gipsfaserplatte relativ dünn sein, weshalb sie auch relativ leicht ist. Die in der Mitte des Plattenverbundes angeordnete wenigstens eine Mineralfaserplatte ist ein sehr leichtes Wärmedämmmaterial und damit auch leicht transportierbar und handhabbar. Auch die wenigstens eine Kalziumsilikatplatte besitzt ein relativ geringes Gewicht. Somit können diese Platten leicht an den Aufbauort gebracht und dort einfach miteinander verbunden, beispielsweise verschraubt, werden. Man benötigt hierzu je nach Gehäusegröße nur eine bis drei Personen, was besonders von Vorteil ist, wenn wenig Platz am Aufbauort vorhanden ist.

Vorzugsweise weist der Bausatz wenigstens einen in die/das wenigstens eine der Korpuswände und/oder Korpuswandelemente eingesetzten oder einsetzbaren und/oder mit der/dem wenigstens einen der Korpuswände und/oder Korpuswandelemente verbundenen oder verbindbaren Schott auf, der aus wenigstens einer Mineralfaserplatte ausgebildet ist.

Es ist von Vorteil, wenn die wenigstens eine Mineralfaserplatte unbeschichtet ist. Dadurch kommt es in einem Brandfall nicht zu Aufschäumeffekten oder anderen Wechselwirkungen an der Oberfläche der Mineralfaserplatte(n), entsprechende Zusatzprüfungen können deshalb eingespart werden.

Es hat sich sowohl bei einem Brand von außen als auch bei Brand von innen als besonders günstig erwiesen, wenn an der Tür eine Türdichtung ausgebildet ist, die aus einer Kombination aus einer inneren Rauchschutzdichtung, einer dazu versetzt angeordneten, äußeren Rauchschutzdichtung, und den drei versetzt zueinander angeordneten und bei Überschreitung eines Temperaturschwellenwertes selbstständig aufschäumenden Dichtungen ausgebildet ist, wobei die innere selbstständig aufschäumende Dichtung weiter innen als die innere Rauchschutzdichtung angeordnet ist, die mittlere selbstständig aufschäumende Dichtung zwischen der inneren Rauchschutzdichtung und der äußeren Rauchschutzdichtung angeordnet ist und die äußere selbstständig aufschäumende Dichtung weiter außen als die äußere Rauchschutzdichtung angeordnet ist.

Die Rauchschutzdichtungen als auch die selbstständig aufschäumenden Dichtungen sind vorzugsweise nur an der Tür vorgesehen.

Die bei der vorliegenden Erfindung verwendeten Rauchschutzdichtungen wirken als mechanischer und damit als konstanter Rauchschutz, d. h. einerseits sowohl bei Normaltemperatur als auch im Brandfall und andererseits sowohl bei einem Brand von innen als auch bei einem Brand von außen. Um dies zu gewährleisten, sind die Rauchschutzdichtungen vorzugsweise als Dichtungslippen ausgebildet.

Die Rauchschutzdichtungen bestehen aus einem wenigstens bis 150 °C wärmebeständigen Material, beispielsweise aus Silikon.

In einer vorteilhaften Ausführungsform des erfindungsgemäßen Bausatzes führt durch die/das wenigstens eine Korpuswand und/oder Korpuswandelement wenigstens ein Lüftungskanal, in dem innen und/oder an dem außen jeweils ein bei Überschreitung eines Temperaturschwellenwertes selbstständig aufschäumendes Material angeordnet ist.

Vorzugsweise ist die Wandstärke der/des wenigstens einen Korpuswand und/oder Korpuswandelementes dort, wo der wenigstens eine Lüftungskanal durch die/das wenigstens eine Korpuswand und/oder Korpuswandelement verläuft, gleich der Wandstärke der/des wenigstens einen Korpuswand und/oder Korpuswandelementes im Bereich des Plattenverbundes und ist der wenigstens eine Lüftungskanal zwischen der wenigstens einen Gipsfaserplatte und der wenigstens einen Kalziumsilikatplatte des Plattenverbundes angeordnet ist.

In einer favorisierten Ausführungsform der Erfindung weist der Bausatz ferner einen Lüfter, wenigstens eine klappbare erste Rauchschutzlippe und wenigstens eine klappbare zweite Rauchschutzlippe auf und weist der wenigstens eine Lüftungskanal wenigstens einen mit dem Lüfter verbundenen oder verbindbaren Lüftungskanal, zwischen dem und dem Lüfter die wenigstens eine klappbare erste Rauchschutzlippe hängt oder aufhängbar ist, und wenigstens einen weiteren Lüftungskanal auf, auf dessen oberem Ende die wenigstens eine klappbare zweite Rauchschutzlippe aufliegt oder montierbar ist.

Vorzugsweise weist der Bausatz auch einen Brandschutzmelder für dessen Installation in dem Innenraum des Verteiler- und/oder Brandschutzgehäuses auf. Durch den Brandschutzmelder kann eine Rauchentwicklung bei einem Brand in dem Innenraum des Verteiler- und/oder Brandschutzgehäuses detektiert werden, woraufhin der Lüfter ausgeschaltet werden kann, woraufhin selbsttätig die erste Rauchschutzlippe und die zweite Rauchschutzlippe die Lüftungskanäle für Zu- und Abluft des Verteiler- und/oder Brandschutzgehäuses schließen.

In einer anderen Variante des erfindungsgemäßen Bausatzes führt durch die/das wenigstens eine Korpuswand und/oder Korpuswandelement wenigstens ein Lüftungskanal, an den ein feuerwiderstandsfähiger Lüftungsschacht anschließbar ist.

Vorzugsweise verläuft der wenigstens eine Lüftungskanal durch eine der Korpuswände, die als Decke des Verteiler- und/oder Brandschutzgehäuses vorgesehen ist. Dadurch kann der jeweils entweder als Zuluftzuführung oder als Abluftabführung genutzte Lüftungskanal auch dann besonders günstig angeschlossen werden, wenn es sich bei dem aus dem Bausatz auszubildenden Verteiler- und/oder Brandschutzgehäuse um ein an einer Wand aufzuhängendes oder an eine Wand zu stellendes Verteiler- und/oder Brandschutzgehäuse handelt.

Eine bevorzugte Ausführungsform der vorliegenden Erfindung, deren Aufbau, Funktion und Vorteile wird im Folgenden anhand von Figuren näher erläutert, wobei
- Figur 1: schematisch eine Ausführungsform eines erfindungsgemäßen Verteiler- und/oder Brandschutzgehäuses in einer perspektivischen Ansicht zeigt;
- Figur 2: schematisch eine geschnittene Seitenansicht eines Details des Verteiler- und/oder Brandschutzgehäuses aus Figur 1 zeigt, wobei man in dem Detail einen vorderen Bereich einer Decke und einen daran angrenzenden oberen Bereich einer Tür des Verteiler- und/oder Brandschutzgehäuses sieht;
- Figur 3: schematisch eine geschnittene Seitenansicht eines anderen Details des Verteiler- und/oder Brandschutzgehäuses aus Figur 1 zeigt, wobei man in diesem Detail einen hinteren Bereich der Decke und einen daran angrenzenden oberen Bereich einer Rückwand des Verteiler- und/oder Brandschutzgehäuses sieht;
- Figur 4: schematisch eine geschnittene Draufsicht eines weiteren Details des Verteiler- und/oder Brandschutzgehäuses aus Figur 1 zeigt, wobei man in diesem Detail einen hinteren Bereich einer Seitenwand und einen daran angrenzenden Bereich der Rückwand des Verteiler- und/oder Brandschutzgehäuses sieht;
- Figur 5: schematisch eine geschnittene Seitenansicht eines Details einer Ausführungsform eines erfindungsgemäßen Verteiler- und/oder Brandschutzgehäuses mit erhöhtem Feuerwiderstand zeigt, wobei man in dem Detail einen vorderen Bereich einer Decke und einen daran angrenzenden oberen Bereich einer Tür des Verteiler- und/oder Brandschutzgehäuses sieht;
- Figur 6: schematisch eine perspektivische Vorderansicht einer Ausführungsform des erfindungsgemäßen Verteiler- und/oder Brandschutzgehäuses mit geöffneter Tür zeigt;
- Figur 7: schematisch eine perspektivische Draufsicht auf eine Decke einer Ausführungsform des erfindungsgemäßen Verteiler- und/oder Brandschutzgehäuses zeigt, wobei in dieser Ansicht ein auf der Decke montierter Lüfter nicht dargestellt ist;
- Figur 8: schematisch die Decke aus Figur 8 mit darauf montiertem Lüfter zeigt;
- Figur 9: schematisch Elemente einer Ausführungsform eines erfindungsgemäßen Bausatzes für ein Verteiler- und/oder Brandschutzgehäuse zeigt; und
- Figur 10: schematisch Elemente einer weiteren Ausführungsform eines erfindungsgemäßen Bausatzes für ein Verteiler- und/oder Brandschutzgehäuse mit erhöhtem Feuerwiderstand zeigt.

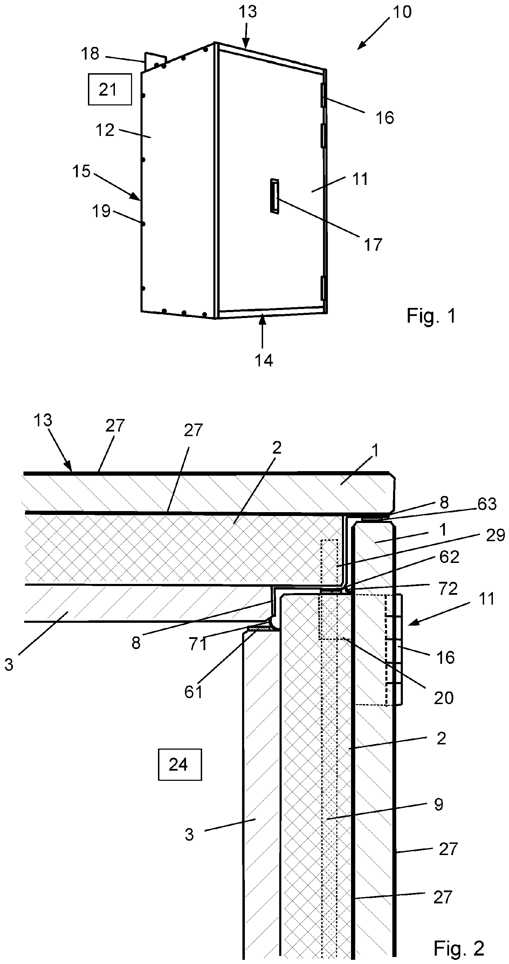

Figur 1 zeigt schematisch eine Ausführungsform eines erfindungsgemäßen Verteiler- und/oder Brandschutzgehäuses 1 in einer perspektivischen Ansicht.

Das Verteiler- und/oder Brandschutzgehäuse 10 weist einen Korpus mit mehreren Korpuswänden auf. Zu den Korpuswänden gehören eine Tür 11, zwei Seitenwände 12, 12' eine Decke 13, einen Boden 14 und eine Rückwand 15 des Verteiler- und/oder Brandschutzgehäuses 10. In anderen, nicht gezeigten Ausführungsformen der vorliegenden Erfindung kann die Rückwand 15 auch ausschnittweise offen ausgeführt werden und das Verteiler- und/oder Brandschutzgehäuse 10 als sogenannte Überstülpvariante montiert werden.

Die Tür 11 ist in dem gezeigten Ausführungsbeispiel mittels Scharnieren 16 an einer der Seitenwände 12' befestigt und dadurch relativ zu der anderen der Seitenwände 12 auf- und zuklappbar. Hierfür weist die Tür 11 einen Griff 17 auf, mit dem ein im Detail in Figur 2 gezeigter Ver- und Entriegelungsmechanismus betätigbar ist, mit dem die Tür 11 in einer in Figur 2 gezeigten Schließstellung des Verteiler- und/oder Brandschutzgehäuses 10 ver- und entriegelt werden kann.

Das Verteiler- und/oder Brandschutzgehäuse 10 ist in dem gezeigten Ausführungsbeispiel ein an eine Wand 21 mittels einer Wandhalterung 18 montiertes Wandgehäuse. In anderen Ausführungsformen der vorliegenden Erfindung kann das Verteiler- und/oder Brandschutzgehäuse auch ein einfach auf einen Boden stellbares Standgehäuse sein.

In einem in Figur 2 schematisch angedeuteten Innenraum 24 des Verteiler- und/oder Brandschutzgehäuses 10 können Komponenten, die einer Stromleitung und Stromverteilung dienen können, wie Elektrokabel, elektronische Baugruppen, mechanische Komponenten, wie Montageschienen und sonstiges Befestigungsmaterial, Sicherungen, Stromzähler, Schalter, Klemmen, Zeitschaltuhren usw., aber auch Telefonkabel, Netzwerkkabel und Datenkabel, wie Lichtwellenleiter, eingebaut sein oder werden.

Figur 2 zeigt schematisch eine geschnittene Seitenansicht eines Details des Verteiler- und/oder Brandschutzgehäuses 10 aus Figur 1. In der Detailansicht sieht man einen vorderen Bereich der Decke 13 und einen daran angrenzenden oberen Bereich der Tür 11 des Verteiler- und/oder Brandschutzgehäuses 10.

Die Decke 13 besteht aus einem Plattenverbund, der in dem gezeigten Ausführungsbeispiel drei miteinander verbundene Platten aufweist. Die Platten sind vorzugsweise miteinander verschraubt. Der Plattenverbund weist außen eine Gipsfaserplatte 1 und innen eine Kalziumsilikatplatte 3 auf, zwischen welchen eine Mineralfaserplatte 2 sandwichartig angeordnet ist.

Die in der Gipsfaserplatte 1 enthaltenen Fasern können beispielsweise Zellulosefasern sein.

Die Tür 11 besteht ebenfalls aus einem Plattenverbund, der in dem gezeigten Ausführungsbeispiel drei miteinander verbundene Platten aufweist. Die Platten sind vorzugsweise miteinander verschraubt. Der Plattenverbund weist ebenfalls außen eine Gipsfaserplatte 1 und innen eine Kalziumsilikatplatte 3 auf, zwischen welchen eine Mineralfaserplatte 2 sandwichartig angeordnet ist.

In dem gezeigten Ausführungsbeispiel weisen die verwendeten Gipsfaserplatten 1 jeweils sowohl auf ihrer Vorderseite als auch auf ihrer Rückseite eine Kunststoffbeschichtung 27 auf.

In anderen, nicht gezeigten Ausführungsformen der vorliegenden Erfindung können bei allen Korpuswänden des Verteiler- und/oder Brandschutzgehäuses 10 anstelle der jeweils einen Gipsfaserplatte 1 mehrere, beispielsweise zwei oder drei Gipsfaserplatten 1, anstelle der einen Mineralfaserplatte 2 mehrere, beispielsweise zwei oder drei Mineralfaserplatten 2 und/oder anstelle der einen Kalziumsilikatplatte 3 mehrere, beispielsweise zwei oder drei Kalziumsilikatplatten 3 verwendet werden. Ferner ist es möglich, dass die wenigstens eine Gipsfaserplatte 1 und/oder die wenigstens eine Mineralfaserplatte 2 und/oder die wenigstens eine Kalziumsilikatplatte 3 jeweils aus mehreren Korpuswandelementen zusammengesetzt oder zusammensetzbar ist.

In dem Ausführungsbeispiel von Figur 2 ragen die jeweils außen liegenden Gipsfaserplatten 1 am weitesten nach außen, während die jeweils am weitesten innen liegenden Kalziumsilikatplatten 3 am kürzesten sind, sodass die jeweils einander hinsichtlich ihres Materials entsprechenden Platten in dem Eckbereich des Verteiler- und/oder Brandschutzgehäuses 10, an dem die jeweiligen Platten aufeinandertreffen, aneinander stoßen.

In dem gezeigten Ausführungsbeispiel sind die Plattenverbünde an ihren Enden jeweils stufen- oder treppenartig ausgebildet. Auf den Stufen des Plattenverbundes der Decke 13 verläuft ein Schließblech 8.

Auf oder an jeder Stufe ist zwischen den aneinander grenzenden Plattenverbünden in dem Eckenbereich des Verteiler- und/oder Brandschutzgehäuses 10 jeweils eine bei Überschreitung eines Temperaturschwellenwertes selbstständig aufschäumende Dichtung 61, 62, 63 vorgesehen. In der gezeigten Ausführungsform befindet sich eine innere bei Überschreitung eines Temperaturschwellenwertes selbstständig aufschäumende Dichtung 61 an einer Seitenkante der Kalziumsilikatplatte 3 der Tür 11. Eine mittlere bei Überschreitung eines Temperaturschwellenwertes selbstständig aufschäumende Dichtung 62 befindet sich an einer Seitenkante der Mineralfaserplatte 2 der Tür 11. Eine äußere bei Überschreitung eines Temperaturschwellenwertes selbstständig aufschäumende Dichtung 63 befindet sich an einer Seitenkante der Gipsfaserplatte 1 der Tür 11.

Ferner sind jeweils in Eckenbereichen zwischen den Plattenverbünden wärmebeständige innere und äußere Rauchschutzdichtungen 71, 72 zueinander versetzt angeordnet. Die äußere Rauchschutzdichtung 72 befindet sich bei dem gezeigten Ausführungsbeispiel zwischen einer Außenkante der Mineralfaserplatte 2 der Decke 13 und einem durch die Gipsfaserplatte 1 der Tür und der Mineralfaserplatte 2 der Tür 11 ausgebildeten Winkel. Die innere Rauchschutzdichtung 71 befindet sich in dem gezeigten Ausführungsbeispiel zwischen einer Außenkante der Kalziumsilikatplatte 3 der Decke 13 und einem durch die Mineralfaserplatte 2 und der Kalziumsilikatplatte 3 der Tür 11 ausgebildeten Winkel.

Die bei Überschreitung eines Temperaturschwellenwertes selbstständig aufschäumenden Dichtungen 61, 62, 63 bestehen aus intumeszierendem Material, wie beispielsweise Blähgraphit.

Die Rauchschutzdichtungen 71, 72 dienen dem Schutz vor Rauch und/oder Feuer.

Bei einem Brand von außen brennt die äußere Rauchschutzdichtung 72 schnell weg. Jedoch schützen die sich jeweils bei einem Brand von außen durch die Außenhitze ausdehnenden äußeren und mittleren selbstständig aufschäumenden Dichtungen 62, 63 im Zusammenwirken mit der inneren Rauchschutzdichtung 71 den Innenraum 24 des Verteiler- und/oder Brandschutzgehäuses 10 vor Temperatur- und/oder Feuchtigkeitseintritt. Bei einem Brand von innen, bei dem die innere Rauchschutzdichtung 71 zerstört wird, schützt die sich durch die Wärme ausdehnende innere selbstständig aufschäumende Dichtung 61 im Zusammenwirken mit der äußeren Rauchschutzdichtung 72 die Umgebung des Verteiler- und/oder Brandschutzgehäuses 10 vor einem Temperatur- und/oder Rauchaustritt aus dem Verteiler- und/oder Brandschutzgehäuse 10.

Die selbstständig aufschäumenden Dichtungen 61, 62, 63 als auch die Rauchschutzdichtungen 71, 72 können in anderen Ausführungsformen der Erfindung auch an anderen geeigneten Stellen zwischen den Plattenverbünden im Eckenbereich des Verteiler- und/oder Brandschutzgehäuses 10 angeordnet sein.

Alle Rauch-, Feuchtigkeits- und/oder Brandschutzdichtungen 61, 62, 63, 71, 72 befinden sich bei der vorliegenden Ausführungsform der Erfindung nur an der Tür 11 und nicht an den Seitenwänden 12, 12', dem Boden 14 und/oder der Decke 15 des Verteiler- und/oder Brandschutzgehäuses 10.

In Figur 2 ist ferner schematisch der Ver- und Entriegelungsmechanismus für die Tür 11 des Verteiler- und/oder Brandschutzgehäuses 10 zu sehen. Der Ver- und Entriegelungsmechanismus weist bei der gezeigten Ausführungsform eine durch die Mineralfaserplatte 2 der Tür 11 führende Schubstange 9 auf. Die Schubstange 9 wird von einer Schubstangenhalterung 20 gehalten. Die Schubstange 9 ist mit Hilfe eines mit dem Griff 17 verbundenen Hebelmechanismus in eine Schubstangenaufnahme 29, die hier in der Mineralfaserplatte 2 der Decke 13 ausgebildet ist, schiebbar.

An der Tür 11 befinden sich darüber hinaus Scharniere 16, von denen in Figur 2 nur eines beispielhaft gezeigt ist. In dem gezeigten Ausführungsbeispiel sind die Scharniere 16 jeweils an der Gipsfaserplatte 1 der Tür 11 und einer neben der Tür 11 stehenden Seitenwand 12' montiert. Die Scharniere 16 können auch nachträglich umgeschraubt werden, um den Türanschlag zu verändern.

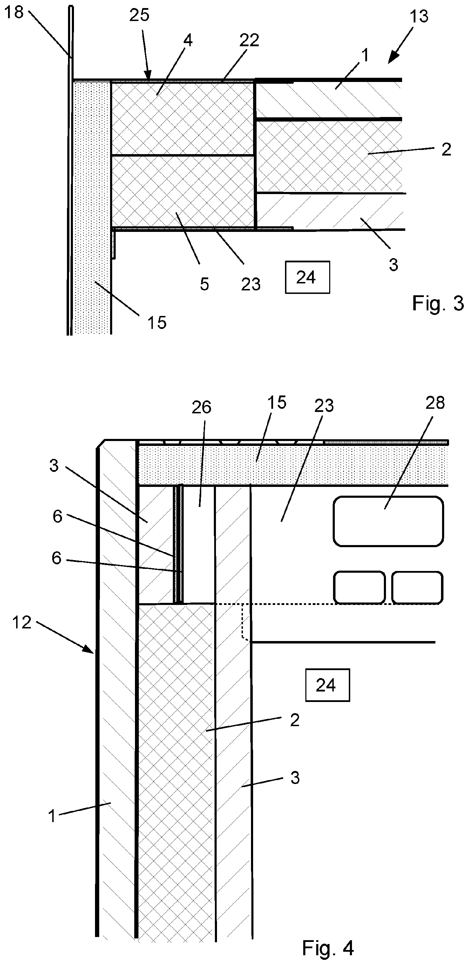

Figur 3 zeigt schematisch eine geschnittene Seitenansicht eines anderen Details des Verteiler- und/oder Brandschutzgehäuses 10 aus Figur 1. In diesem Detail sieht man einen hinteren Bereich der Decke 13 und einen daran angrenzenden oberen Bereich der Rückwand 15 des Verteiler- und/oder Brandschutzgehäuses 10.

Wie schon in Figur 2 zu sehen, besteht ein Großteil der Decke 13 aus dem oben beschriebenen Plattenverbund, der die außen befindliche Gipsfaserplatte 1, die mittlere Mineralfaserplatte 2 und die innen befindliche Kalziumsilikatplatte 3 umfasst.

Angrenzend an die Rückwand 15 weist die Decke 13 einen geänderten Aufbau auf. So weist die Decke 13 zwischen dem Plattenverbund und der Rückwand 15 einen Schott 25 auf. Der Schott 25 dient einer Durchführung von Leitungen aus dem Innenraum 24 des Verteiler- und/oder Brandschutzgehäuses 10 nach außen bzw. umgekehrt.

In dem gezeigten Ausführungsbeispiel besteht der Schott 25 aus zwei Mineralfaserplatten 4, 5, wobei auf einer Oberseite der Mineralfaserplatte 4 ein äußeres Kabeldurchführungsblech 22 und an einer Unterseite der Mineralfaserplatte 5 ein inneres Kabeldurchführungsblech 23 vorgesehen ist.

Die Kabeldurchführungsbleche 22, 23 halten die Mineralfaserplatten 4, 5, damit sie nicht aus der Decke 13 herausfallen.

Wie es in Figur 4 beispielhaft anhand des in einer Draufsicht gezeigten Kabeldurchführungsblechs 23 zu sehen ist, weisen die Kabeldurchführungsbleche 22, 23 Öffnungen 28 für die Kabeldurchführung auf. Die Öffnungen 28 können beispielsweise ausgestanzt sein. Anstelle von Blech kann auch ein anderes geeignetes Material für eine gezielte und/oder gebündelte Kabeldurchführung verwendet werden. Anstelle der beiden Mineralfaserplatten 4, 5 kann auch nur eine einzige Mineralfaserplatte oder es können auch mehr als zwei, beispielsweise drei Mineralfaserplatten für die Ausbildung des Schotts 25 verwendet werden.

In dem gezeigten Ausführungsbeispiel besteht die Rückwand 15 des Verteiler- und/oder Brandschutzgehäuses 10 aus einer einzigen keine Beschichtung aufweisenden Gipsfaserplatte. Auf der Rückseite der Gipsfaserplatte ist die Wandhalterung 18 angebracht. Diese vereinfache Ausführung der Rückwand 15 ist in dem gezeigten Ausführungsbeispiel dadurch möglich, weil die Rückwand direkt an der Raumwand 21 befestigt ist. In anderen, nicht gezeigten Ausführungsformen der Erfindung kann auch die Rückwand 15 aus einem dreiteiligen Plattenverbund, beispielsweise wie oben beschrieben, ausgebildet sein, insbesondere dann, wenn das Verteiler- und/oder Brandschutzgehäuse 10 als Standgehäuse ausgeführt ist und frei im Raum stehen soll.

Figur 4 zeigt schematisch ein weiteres Detail des Verteiler- und/oder Brandschutzgehäuses 10 aus Figur 1. In diesem Detail sieht man einen hinteren Bereich einer Seitenwand 12, einen daran angrenzenden Bereich der Rückwand 15 des Verteiler- und/oder Brandschutzgehäuses 10 und einen an die Seitenwand 12 und an die Rückwand 15 angrenzenden Bereich des in die Decke 13 integrierten, inneren Kabeldurchführungsblechs 23 in einer geschnittenen Draufsicht.

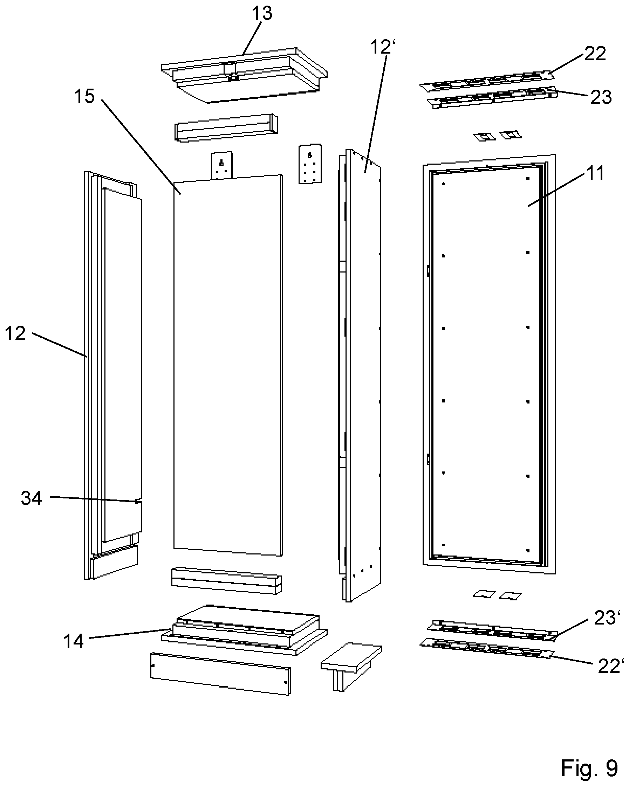

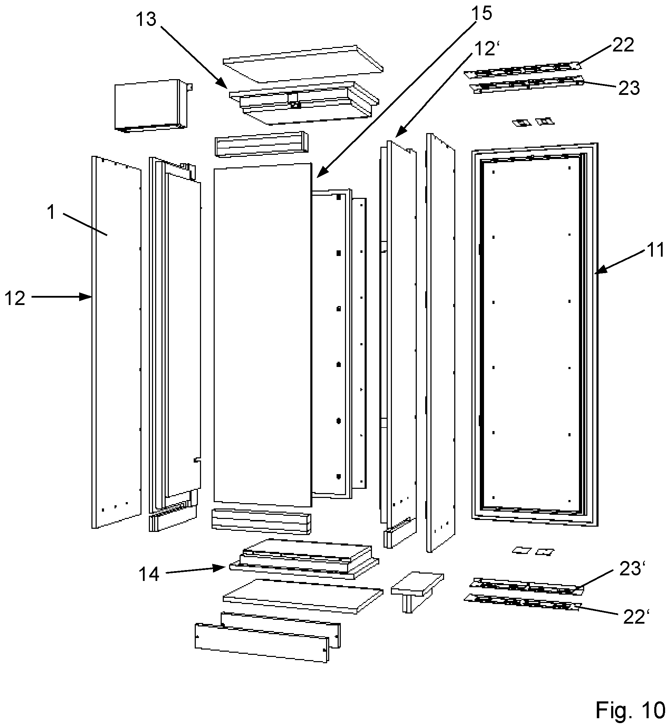

Die Seitenwand 12 ist zunächst fast über ihre gesamte Länge aus dem oben beschriebenen Plattenverbund, der außen eine Gipsfaserplatte 1, in der Mitte eine Mineralfaserplatte 2 und innen eine Kalziumsilikatplatte 3 aufweist, zusammengesetzt. Wie oben beschrieben, können anstelle der einzelnen Platten auch mehrere Platten verwendet werden. Ferner können die Platten auch aus Korpuswandelementen zusammengesetzt sein, also einzelnen als oben beschriebener Plattenverbund aufgebauten Elementen, wie beispielsweise Steckelementen, die dann zu der Korpuswand, also hier der Seitenwand 12, montiert sind. Letzteres gilt für alle Korpuswände des Verteiler- und/oder Brandschutzgehäuses 10, dessen Einzelelemente, wie es in den Figuren 9 und 10 zu sehen ist, als Bausatz zur Verfügung gestellt werden und zu dem Verteiler- und/oder Brandschutzgehäuse 10 zusammengebaut werden können.

In einem an die Rückwand 15 angrenzenden Bereich weist die Seitenwand 12 einen geänderten Aufbau auf. In diesem Bereich weist die Seitenwand 12 außen die Gipsfaserplatte 1 und innen die Kalziumsilikatplatte 3 auf, wobei zwischen der Gipsfaserplatte 1 und der innen befindlichen Kalziumsilikatplatte 3 eine weitere Kalziumsilikatplatte 3, auf deren Innenseite ein bei Überschreitung eines Temperaturschwellenwertes selbstständig aufschäumendes Material 6 angeordnet ist, und ein Lüftungskanal 26 vorgesehen sind.

Der Lüftungskanal 26 kann beispielsweise an ein hier nicht dargestelltes Lüftungssystem und/oder über einen hier nicht dargestellten Lüftungsschacht beispielsweise mit einem Nachbarraum verbunden sein. Ein solches Lüftungssystem und/oder ein solcher Lüftungsschacht kann auch einen Feuerwiderstand haben.

Kommt es zu einem Brandfall im Innenraum 24 des Verteiler- und/oder Brandschutzgehäuses 10, schäumt das innerhalb des Lüftungskanals 25 angeordnete bei Überschreitung eines Temperaturschwellenwertes selbstständig aufschäumende Material 6 auf und verschließt hierdurch den Lüftungskanal 26. Außen an dem Lüftungskanal 26 ist ebenfalls ein bei Überschreitung eines Temperaturschwellenwertes selbstständig aufschäumendes Material 6 angeordnet, das bei einem Brand von außen aufschäumt. Ist der Lüftungskanal 26 an ein hier nicht dargestelltes Lüftungssystem mit Feuerwiderstand und/oder über einen hier nicht dargestellten Lüftungsschacht mit Feuerwiderstand beispielsweise mit einem Nachbarraum verbunden, schäumt das Material 6 nicht auf und der Lüftungskanal 26 bleibt offen. So kann über den Lüftungskanal 26 eine Zuluftzuführung auch bei einem Brand von außen realisiert werden.

In den Korpuswänden des Verteiler- und/oder Brandschutzgehäuses 10 befinden sich mehrere, wenigstens aber zwei, solcher Lüftungskanäle 26, 26'. Die Lüftungskanäle 26, 26' dienen als Zuluftzuführung bzw. als Abluftabführung für das Verteiler- und/oder Brandschutzgehäuse 10. Die Lüftungskanäle 26, 26' sind vorteilhafterweise in den Seitenwänden 12, 12' des Verteiler- und/oder Brandschutzgehäuses 10 integriert. Vorzugsweise führen die Lüftungskanäle 26, 26' durch die Decke 13, können aber auch auf die Decke 13 und den Boden 14 des Verteiler- und/oder Brandschutzgehäuses 10 verteilt werden.

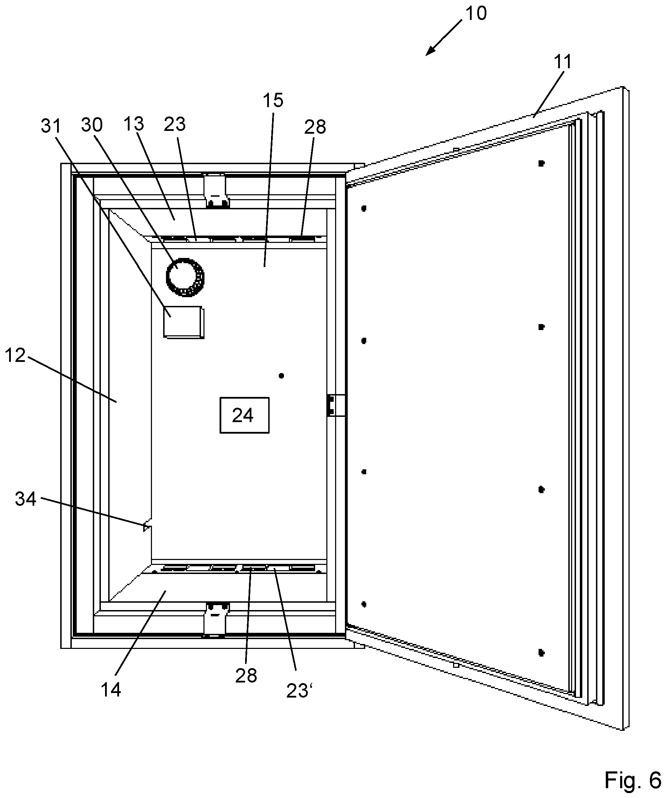

So befindet sich die in Figur 4 gezeigte Anordnung bei dem beispielsweise in Figur 1 oder Figur 6 gezeigten erfindungsgemäßen Verteiler- und/oder Brandschutzgehäuse 10 spiegelsymmetrisch auch an der anderen Seitenwand 12', wobei der der in der Seitenwand 12' befindliche Lüftungskanal 26' als Abluftabführung genutzt wird.

Auf die Lüftungskanäle 26, 26' können hier nicht gezeigte Hauben aufgebracht werden. Diese Hauben erfüllen die Funktion, dass ein gewisser Schutz vor Feuchtigkeit bzw. Wasser aus der Umgebung erreicht wird.

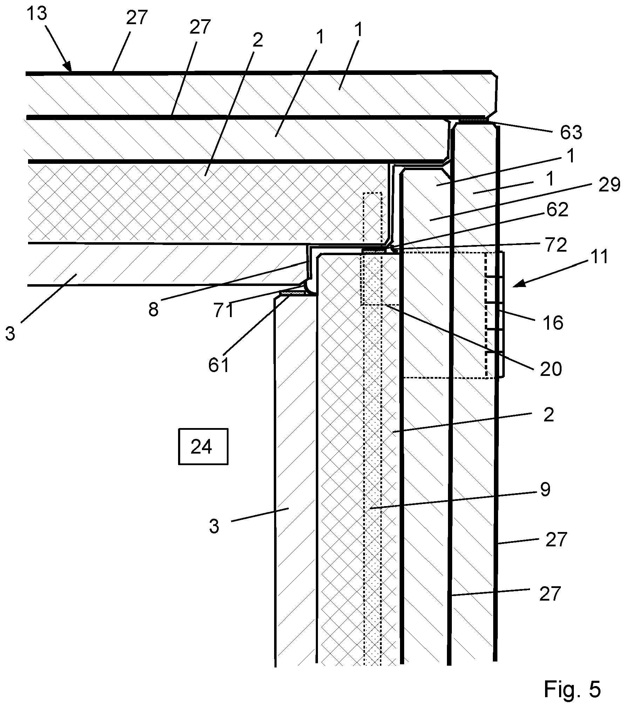

Figur 5 zeigt schematisch eine geschnittene Seitenansicht eines Details einer Ausführungsform eines erfindungsgemäßen Verteiler- und/oder Brandschutzgehäuses 10 mit erhöhtem Feuerwiderstand, wie z. B. von 90 Minuten. In dem gezeigten Detail sieht man einen vorderen Bereich einer Decke 13 und einen daran angrenzenden oberen Bereich einer Tür 11 des Verteiler- und/oder Brandschutzgehäuses 10. In der gezeigten Ausführungsform bezeichnen gleiche Bezugszeichen wie in Figur 2 gleiche Elemente, auf deren zuvor erfolgte Beschreibung hiermit verwiesen wird. Im Unterschied zu Figur 2, in der ein Detail eines einen Feuerwiderstand von 60 Minuten aufweisenden Verteiler- und/oder Brandschutzgehäuses 10 gezeigt ist, weist das Verteiler- und/oder Brandschutzgehäuse 10 aus Figur 5 einen Feuerwiderstand von mehr als 100 Minuten dadurch auf, dass hier jeweils an den Außenseiten der Korpuswände nicht nur eine, sondern zwei aufeinander angeordnete Gipsfaserplatten 1, 1, also Aufdopplungen, verwendet wurden. Diese beiden Gipsfaserplatten 1, 1 können Bestandteile eines beispielsweise in den Figuren 9 und 10 gezeigten Bausatzes für ein solches Verteiler- und/oder Brandschutzgehäuse 10 sein.

Figur 6 zeigt schematisch eine perspektivische Vorderansicht einer Ausführungsform des erfindungsgemäßen Verteiler- und/oder Brandschutzgehäuses 10 mit geöffneter Tür 11. Durch die geöffnete Tür 11 sieht man in den Innenraum 24 des Verteiler- und/oder Brandschutzgehäuses 10, wobei man in der gezeigten Darstellung eine der Seitenwände 12, die Rückwand 15, den Boden 14 und die Decke 13 des Verteiler- und/oder Brandschutzgehäuses 10 von innen sieht.

In an die Rückwand 15 angrenzenden, hinteren Bereichen des Bodens 14 und der Decke 13 befinden sich die auch in Figur 4 gezeigten, jeweils durch Kabeldurchführungsbleche 23, 23` hindurchgehenden Öffnungen 28 für die Kabeldurchführung.

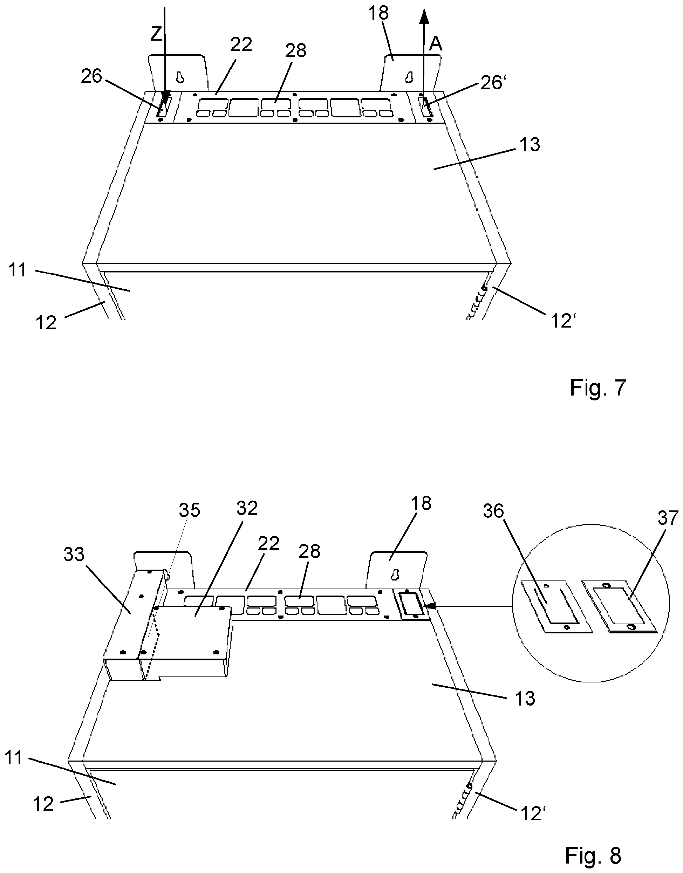

Bei der gezeigten Ausführungsform befinden sich an der Innenseite der Rückwand 15 ein Rauchmelder 30 und ein Netzteil 31. In anderen Ausführungsformen der Erfindung können der Rauchmelder 30 und/oder das Netzteil 31 auch an den Innenseiten der Seitenwände 12, 12' oder der Decke 13 des Verteiler- und/oder Brandschutzgehäuses 10 angeordnet sein. Durch den Rauchmelder 30 wird insbesondere eine bei einem Brand im Innenraum 24 des Verteiler- und/oder Brandschutzgehäuses 10 entstehende Rauchentwicklung detektiert. Der Rauchmelder 30 ist mit einem auf der Decke 13 des Verteiler- und/oder Brandschutzgehäuses 10 installierten, in Figur 8 zu sehenden Lüfter 32 verbunden.

Figur 7 zeigt schematisch eine perspektivische Draufsicht auf die Decke 13 des erfindungsgemäßen Verteiler- und/oder Brandschutzgehäuses 10 aus Figur 6, während Figur 8 schematisch die Decke aus Figur 8 mit dem oben bereits erwähnten, darauf montierten Lüfter 32 zeigt.

Im Regelbetrieb des Verteiler- und/oder Brandschutzgehäuses 10, während dessen kein Brand vorliegt, ist der Lüfter 32 in Betrieb. Der Lüfter 32 ist über ein auf der Decke 13, oberhalb des Lüftungskanals 26 montiertes Aufsatzgehäuseteil 33 mit dem Lüftungskanal 26 in Verbindung. Dadurch strömt im Regelbetrieb in der schematisch in Figur 7 durch den Pfeil gezeigten Luftzufuhrrichtung Z Umgebungstemperatur aufweisende Luft in den Lüftungskanal 26.

Dabei ist zwischen dem Lüfter 32 und dem Aufsatzgehäuseteil 33 oder alternativ in dem Aufsatzgehäuseteil 33 eine nach unten hängende erste Rauchschutzlippe 35 angeordnet. Die erste Rauchschutzlippe 35 besteht aus einem mindestens bis zu 150 °C wärmebeständigen, flexiblen Material, wie beispielsweise aus Silikon. Ist der Lüfter 32 in Betrieb, wird durch die erste Rauchschutzlippe 35 durch den Luftdruck aufgeklappt, sodass die Luft in den Lüftungskanal 26 strömen kann.

Die Luft tritt entsprechend des Verlaufs des Lüftungskanals 26 durch die Decke 13 und verläuft dann durch die Seitenwand 12 bis zu einer in Figur 6 zu sehenden LufteintrittsÖffnung 34, die in einem unteren Bereich des Verteiler- und/oder Brandschutzgehäuses 10 in dessen Innenraum 24 mündet.

In der anderen Seitenwand 12' befindet sich in einem oberen Bereich des Verteiler- und/oder Brandschutzgehäuses 10 eine in der gezeigten Darstellung nicht zu sehende Luftaustrittsöffnung, die in den Lüftungskanal 26' mündet. Dieser Lüftungskanal 26' führt durch einen oberen Bereich der Seitenwand 12' und danach durch die Decke 13. Wie es schematisch in Figur 7 zu sehen ist, strömt die Abluft durch den Lüftungskanal 26' entsprechend der Luftabführungsrichtung A aus dem Verteiler- und/oder Brandschutzgehäuse 10.

Wie es in Figur 8 zu sehen ist, befindet sich auf dem oberen Ende, also auf der Abluftöffnung, des Lüftungskanals 26' eine zweite Rauchschutzlippe 36. Die zweite Rauchschutzlippe 36 besteht aus einem mindestens bis zu 150 °C wärmebeständigen, flexiblen Material, wie beispielsweise aus Silikon. Sie ist in dem gezeigten Ausführungsbeispiel mittels eines Rahmens 37 auf den Lüftungskanal 26' aufgesetzt. Ist der Lüfter 32 in Betrieb, ist die zweite Rauchschutzlippe 36 durch den Druck der Abluft nach oben geklappt, sodass die Abluftöffnung offen ist.

Wird durch den Rauchmelder 30 Rauch detektiert, wird der Lüfter 32 abgeschaltet. Dies führt dazu, dass die erste Rauchschutzlippe 35 schwerkraftbedingt nach unten klappt, wodurch ein Lufteintritt von außen in den Lüftungskanal 26 und damit in den Innenraum 24 des Verteiler- und/oder Brandschutzgehäuses 10 verhindert wird. Gleichzeitig klappt die zweite Rauchschutzlippe 36 durch die Schwerkraft nach unten, sodass auch der Lüftungskanal 26` verschlossen ist und keine Abluft aus dem Verteiler- und/oder Brandschutzgehäuse 10 austritt. Dadurch wird erreicht, dass kein Kaltrauch aus dem Innenraum des Verteiler- und/oder Brandschutzgehäuses 10 nach außen treten kann.

Bei einem Brand im Innenraum des Verteiler- und/oder Brandschutzgehäuses 10 und/oder heißem Rauch von innen werden die Lüftungskanäle 26, 26' durch eine innerhalb der Lüftungskanäle 26, 26' befindliche Dichtung 6 verschlossen.

Die Figuren 9 und 10 zeigen schematisch Elemente möglicher Ausführungsformen eines erfindungsgemäßen Bausatzes für das erfindungsgemäße Verteiler- und/oder Brandschutzgehäuse 10.

Ein solcher Bausatz erfüllt die erforderlichen Brandschutzvoraussetzungen. Er besitzt darüber hinaus den Vorteil, dass ein bereits vor Ort aufgebautes erfindungsgemäßes Verteiler- und/oder Brandschutzgehäuse 10 durch weitere Bausatzelemente des modular aufgebauten Bausatzes aufgestockt werden kann.

Wie in den Figuren 9 und 10 zu sehen, weist ein solcher Bausatz eine Tür 11, zwei Seitenwände 12, 12', eine Decke 13, einen Boden 14, eine Rückwand 15, obere und/oder untere Kabeldurchführungsschotts 25, äußere und/oder innere Kabeldurchführungsbleche 22, 23 sowie Schrauben und Befestigungsmaterial auf. Zusätzlich kann der Bausatz beispielsweise einen Unterboden, Sockelbleche, eine Sockelunterstützung, einen Lüfter, Lüftungsbleche, einen Rauchmelder, wenigstens ein Thermoelement, Dichtungslippen, Abdeckbleche und/oder Aufdopplungen der jeweiligen Korpuswände 11, 12, 12', 13, 14, 15 durch zusätzliche Gipsfaserplatten 1 aufweisen.

## Patentansprüche

1. Verteiler- und/oder Brandschutzgehäuse (10) mit einem Korpus, der wenigstens eine Korpuswand (11, 12, 12`, 13, 14, 15) aufweist, die wenigstens teilweise aus einem Plattenverbund aus wenigstens drei Platten ausgebildet ist, wobei eine äußere dieser Platten, die eine Außenseite des Verteiler- und/oder Brandschutzgehäuses (10) bildet, aus wenigstens einer Gipsfaserplatte (1) ausgebildet ist,
und der Plattenverbund wenigstens eine auf einer Innenseite der wenigstens einen Gipsfaserplatte (1) angeordnete Mineralfaserplatte (2) und wenigstens eine auf einer Innenseite der wenigstens einen Mineralfaserplatte (2) angeordnete und einem Innenraum (24) des Verteiler- und/oder Brandschutzgehäuses (10) zugewandte Kalziumsilikatplatte (3) aufweist,
**dadurch gekennzeichnet,**
**dass** eine der aus dem Plattenverbund ausgebildeten Korpuswände als eine Tür (11) ausgebildet ist, an die eine auch aus dem Plattenverbund ausgebildete Korpuswand (13) angrenzt, wobei diese Plattenverbünde an ihren Enden jeweils stufen- oder treppenartig ausgebildet sind, wobei sich eine innere bei Überschreitung eines Temperaturschwellenwertes selbstständig aufschäumende Dichtung (61) an einer Seitenkante der Kalziumsilikatplatte (3) der Tür (11) befindet, sich eine mittlere bei Überschreitung eines Temperaturschwellenwertes selbstständig aufschäumende Dichtung (62) an einer Seitenkante der Mineralfaserplatte (2) der Tür (11) befindet, und sich eine äußere bei Überschreitung eines Temperaturschwellenwertes selbstständig aufschäumende Dichtung (63) an einer Seitenkante der Gipsfaserplatte (1) der Tür (11) befindet.

2. Verteiler- und/oder Brandschutzgehäuse nach Anspruch 1, **dadurch gekennzeichnet, dass** die wenigstens eine Korpuswand (11, 12, 12', 13, 14, 15) einen in den Plattenverbund eingebauten oder an den Plattenverbund direkt angrenzenden Schott (25) aufweist, der aus wenigstens einer Mineralfaserplatte (4, 5) ausgebildet ist.

3. Verteiler- und/oder Brandschutzgehäuse nach einem der vorhergehenden Ansprüche, **dadurch gekennzeichnet, dass** zwischen der Tür (11) und einer daran angrenzenden, auch aus dem Plattenverbund ausgebildeten Korpuswand (13) eine Türdichtung ausgebildet ist, die aus einer Kombination aus einer inneren Rauchschutzdichtung (71), einer dazu versetzt angeordneten, äußeren Rauchschutzdichtung (72), und den drei versetzt zueinander angeordneten und bei Überschreitung eines Temperaturschwellenwertes selbstständig aufschäumenden Dichtungen (61, 62, 63) ausgebildet ist, wobei die innere selbstständig aufschäumende Dichtung (61) weiter innen als die innere Rauchschutzdichtung (71) angeordnet ist, die mittlere selbstständig aufschäumende Dichtung (62) zwischen der inneren Rauchschutzdichtung (71) und der äußeren Rauchschutzdichtung (72) angeordnet ist und die äußere selbstständig aufschäumende Dichtung (63) weiter außen als die äußere Rauchschutzdichtung (72) angeordnet ist.

4. Verteiler- und/oder Brandschutzgehäuse nach einem der vorhergehenden Ansprüche, **dadurch gekennzeichnet, dass** die wenigstens eine Korpuswand (11, 12, 12', 13, 14, 15) wenigstens einen durch den Plattenverbund durchführenden oder an wenigstens eine Platte des Plattenverbundes direkt angrenzenden Lüftungskanal (26, 26') aufweist, in dem innen und/oder an dem außen jeweils ein bei Überschreitung eines Temperaturschwellenwertes selbstständig aufschäumendes Material (6) angeordnet ist.

5. Verteiler- und/oder Brandschutzgehäuse nach Anspruch 4, **dadurch gekennzeichnet, dass** die Wandstärke der wenigstens einen Korpuswand (11, 12, 12`, 13, 14, 15) dort, wo der wenigstens eine Lüftungskanal (26, 26`) durch die wenigstens eine Korpuswand (11, 12, 12', 13, 14, 15) verläuft, gleich der Wandstärke der wenigstens einen Korpuswand (11, 12, 12`, 13, 14, 15) im Bereich des Plattenverbundes ist und der wenigstens eine Lüftungskanal (26, 26') zwischen der wenigstens einen Gipsfaserplatte (1) und der wenigstens einen Kalziumsilikatplatte (3) des Plattenverbundes angeordnet ist.

6. Verteiler- und/oder Brandschutzgehäuse nach Anspruch 4 oder 5, **dadurch gekennzeichnet, dass** der wenigstens eine Lüftungskanal (26, 26') wenigstens einen als Zuluftkanal genutzten und mit einem Lüfter (32) verbundenen Lüftungskanal (26), zwischen dem und dem Lüfter (32) wenigstens eine klappbare erste Rauchschutzlippe (35) hängt, und wenigstens einen weiteren, als Abluftkanal genutzten Lüftungskanal (26') aufweist, auf dessen als Abluftöffnung genutzten oberem Ende wenigstens eine klappbare zweite Rauchschutzlippe (36) aufliegt.

7. Brandschutzeinrichtung mit einem Verteiler- und/oder Brandschutzgehäuse (10) nach einem der Ansprüche 1 bis 3, **dadurch gekennzeichnet, dass** durch die wenigstens eine Korpuswand (11, 12, 12', 13, 14, 15) wenigstens ein Lüftungskanal (26, 26') führt, der mit einer Lüftungsanlage verbunden ist, die in einen von dem Raum, in dem sich das Verteiler- und/oder Brandschutzgehäuse (10) befindet, brandschutztechnisch getrennten Raum mündet.

8. Brandschutzeinrichtung nach Anspruch 7, **dadurch gekennzeichnet, dass** der wenigstens eine Lüftungskanal (26, 26')durch wenigstens eine der Korpuswände verläuft, die eine Decke (13) des Verteiler- und/oder Brandschutzgehäuses (10) bildet.

9. Bausatz für ein Verteiler- und/oder Brandschutzgehäuse (10), aufweisend mehrere miteinander verbindbare Korpuswände (11, 12, 12', 13, 14, 15) und/oder Korpuswandelemente, wobei wenigstens eine(s) der Korpuswände (11, 12, 12`, 13, 14, 15) und/oder Korpuswandelemente aus einem Plattenverbund aus wenigstens drei Platten ausgebildet ist, wobei eine äußere dieser Platten aus wenigstens einer Gipsfaserplatte (1) ausgebildet ist,
und der Plattenverbund wenigstens eine auf einer Innenseite der wenigstens einen Gipsfaserplatte (1) angeordnete Mineralfaserplatte (2) und wenigstens eine auf einer Innenseite der wenigstens einen Mineralfaserplatte (2) angeordnete Kalziumsilikatplatte (3) aufweist,
**dadurch gekennzeichnet,**
**dass** eine der aus dem Plattenverbund ausgebildeten Korpuswände und/oder Korpuswandelemente als eine Tür (11) ausgebildet ist, an die eine auch aus dem Plattenverbund ausgebildete Korpuswand (13) angrenzt, wobei diese Plattenverbünde an ihren Enden jeweils stufen- oder treppenartig ausgebildet sind, wobei sich eine innere bei Überschreitung eines Temperaturschwellenwertes selbstständig aufschäumende Dichtung (61) an einer Seitenkante der Kalziumsilikatplatte (3) der Tür (11) befindet, sich eine mittlere bei Überschreitung eines Temperaturschwellenwertes selbstständig aufschäumende Dichtung (62) an einer Seitenkante der Mineralfaserplatte (2) der Tür (11) befindet, und sich eine äußere bei Überschreitung eines Temperaturschwellenwertes selbstständig aufschäumende Dichtung (63) an einer Seitenkante der Gipsfaserplatte (1) der Tür (11) befindet.

10. Bausatz nach Anspruch 9, **dadurch gekennzeichnet, dass** der Bausatz wenigstens einen in die/das wenigstens eine der Korpuswände (11, 12, 12', 13, 14, 15) und/oder Korpuswandelemente eingesetzten oder einsetzbaren und/oder mit der/dem wenigstens einen der Korpuswände (11, 12, 12', 13, 14, 15) und/oder Korpuswandelemente verbundenen oder verbindbaren Schott (25) aufweist, der aus wenigstens einer Mineralfaserplatte (4, 5) ausgebildet ist.

11. Bausatz nach einem der Ansprüche 9 oder 10, **dadurch gekennzeichnet, dass** an der Tür (11) eine Türdichtung ausgebildet ist, die aus einer Kombination aus einer inneren Rauchschutzdichtung (71), einer dazu versetzt angeordneten, äußeren Rauchschutzdichtung (72), und den drei versetzt zueinander angeordneten und bei Überschreitung eines Temperaturschwellenwertes selbstständig aufschäumenden Dichtungen (61, 62, 63) ausgebildet ist, wobei die innere selbstständig aufschäumende Dichtung (61) weiter innen als die innere Rauchschutzdichtung (71) angeordnet ist, die mittlere selbstständig aufschäumende Dichtung (62) zwischen der inneren Rauchschutzdichtung (71) und der äußeren Rauchschutzdichtung (72) angeordnet ist und die äußere selbstständig aufschäumende Dichtung (63) weiter außen als die äußere Rauchschutzdichtung (72) angeordnet ist.

12. Bausatz nach einem der Ansprüche 9 bis 11, **dadurch gekennzeichnet, dass** die/das wenigstens eine Korpuswand (11, 12, 12`, 13, 14, 15) und/oder Korpuswandelement wenigstens einen durch den Plattenverbund durchführenden oder an wenigstens eine Platte des Plattenverbundes direkt angrenzenden Lüftungskanal (26, 26') aufweist, in dem innen und/oder an dem außen jeweils ein bei Überschreitung eines Temperaturschwellenwertes selbstständig aufschäumendes Material (6) angeordnet ist.

13. Bausatz nach Anspruch 12, **dadurch gekennzeichnet, dass** die Wandstärke der/des wenigstens einen Korpuswand (11, 12, 12`, 13, 14, 15) und/oder Korpuswandelementes dort, wo der wenigstens eine Lüftungskanal (26, 26') durch die/das wenigstens eine Korpuswand (11, 12, 12`, 13, 14, 15) und/oder Korpuswandelement verläuft, gleich der Wandstärke der/des wenigstens einen Korpuswand (11, 12, 12', 13, 14, 15) und/oder Korpuswandelementes im Bereich des Plattenverbundes ist und der wenigstens eine Lüftungskanal (26) zwischen der wenigstens einen Gipsfaserplatte (1) und der wenigstens einen Kalziumsilikatplatte (3) des Plattenverbundes angeordnet ist.

14. Bausatz nach einem der Ansprüche 11 bis 13, **dadurch gekennzeichnet, dass** der Bausatz ferner einen Lüfter (32), wenigstens eine klappbare erste Rauchschutzlippe (35) und wenigstens eine klappbare zweite Rauchschutzlippe (36) aufweist, und der wenigstens eine Lüftungskanal (26, 26') wenigstens einen mit dem Lüfter (32) verbundenen oder verbindbaren Lüftungskanal (26), zwischen dem und dem Lüfter (32) die wenigstens eine klappbare erste Rauchschutzlippe (35) hängt oder aufhängbar ist, und wenigstens einen weiteren Lüftungskanal (26') aufweist, auf dessen oberem Ende die wenigstens eine klappbare zweite Rauchschutzlippe (36) aufliegt oder montierbar ist.

15. Bausatz nach Anspruch 11, **dadurch gekennzeichnet, dass** durch die/das wenigstens eine Korpuswand (11, 12, 12', 13, 14, 15) und/oder Korpuswandelement wenigstens ein Lüftungskanal (26, 26`) führt, an den ein feuerwiderstandsfähiger Lüftungsschacht anschließbar ist.

16. Bausatz nach einem der Ansprüche 11 bis 15, **dadurch gekennzeichnet, dass** der wenigstens eine Lüftungskanal (26, 26`) durch wenigstens eine der Korpuswände verläuft, die als Decke (13) des Verteiler- und/oder Brandschutzgehäuses (10) vorgesehen ist.

## Claims

1. Distributor and/or fire protection casing (10) comprising a body which has at least one body wall (11, 12, 12', 13, 14, 15) which is formed at least partially from a plate compound structure consisting of at least three plates, wherein an outer plate of these plates, which forms an outer side of the distributor and/or fire protection casing (10), is formed from at least one gypsum fiber board (1), and the plate compound structure comprises at least one mineral fiber board (2) arranged on an inner side of the at least one gypsum fiber board (1) and at least one calcium silicate board (3) arranged on an inner side of the at least one mineral fiber board (2) and facing an interior space (24) of the distributor and/or fire protection casing (10),
**characterized in that**
one of the body walls formed from the plate compound structure is formed as a door (11) to which a body wall (13), also formed from the plate compound structure, is adjacent, wherein these plate compound structures are formed in a step-like or stair-like manner at their ends, wherein an upon exceeding a temperature threshold value automatically foaming-up inner seal (61) is located on a side edge of the calcium silicate board (3) of the door (11), an upon exceeding a temperature threshold value automatically foaming-up intermediate seal (62) is located on a side edge of the mineral fiber board (2) of the door (11), and an upon exceeding a temperature threshold value automatically foaming-up outer seal (63) is located on a side edge of the gypsum fiber board (1) of the door (11).

2. Distributor and/or fire protection casing according to claim 1, **characterized in that** the at least one body wall (11, 12, 12', 13, 14, 15) comprises a bulkhead (25) being installed in the plate compound structure or being directly adjacently to the plate compound structure, which bulkhead (25) is formed from at least one mineral fiber board (4, 5).

3. Distributor and/or fire protection casing according to one of the preceding claims, **characterized in that** a door seal is formed between the door (11) and a body wall (13) adjacent thereto, which is also formed from the plate compound structure, which door seal is formed from a combination of an inner smoke protection seal (71), an outer smoke protection seal (72) arranged offset thereto, and the three upon exceeding a temperature threshold value automatically foaming-up seals (61, 62, 63) that are arranged offset relative to one another, wherein the inner automatically foaming-up seal (61) is arranged further inward than the inner smoke protection seal (71), the intermediate automatically foaming-up seal (62) is arranged between the inner smoke protection seal (71) and the outer smoke protection seal (72), and the outer automatically foaming-up seal (63) is arranged further outward than the outer smoke protection seal (72).

4. Distributor and/or fire protection casing according to one of the preceding claims, **characterized in that** the at least one body wall (11, 12, 12', 13, 14, 15) comprises at least one ventilation channel (26, 26') which passes through the plate compound structure or directly adjoins at least one plate of the plate compound structure, wherein in the inside and/or on the outside of which ventilation channel (26, 26') an upon exceeding a temperature threshold value automatically foaming-up material (6) is arranged.

5. Distributor and/or fire protection casing according to claim 4, **characterized in that** the wall thickness of the at least one body wall (11, 12, 12', 13, 14, 15) where the at least one ventilation channel (26, 26') runs through the at least one body wall (11, 12, 12', 13, 14, 15) is equal to the wall thickness of the at least one body wall (11, 12, 12', 13, 14, 15) in the region of the plate compound structure, and the at least one ventilation channel (26, 26') is arranged between the at least one gypsum fiber board (1) and the at least one calcium silicate board (3) of the plate compound structure.

6. Distributor and/or fire protection casing according to either claim 4 or claim 5, **characterized in that** the at least one ventilation channel (26, 26') comprises at least one ventilation channel (26) used as a supply air channel and connected to a fan (32), between which ventilation channel (26) and the fan (32) at least one foldable first smoke protection lip (35) is suspended, and at least one further ventilation channel (26`) used as an exhaust air channel, on the upper end of which, used as an exhaust air opening, at least one foldable second smoke protection lip (36) rests.

7. Fire protection device comprising a distributor and/or fire protection casing (10) according to one of the claims 1 to 3, **characterized in that** at least one ventilation channel (26, 26'), which is connected to a ventilation system which opens into a space that is separated from the space in which the distributor and/or fire protection casing (10) is located for fire protection purposes, passes through the at least one body wall (11, 12, 12', 13, 14, 15).

8. Fire protection device according to claim 7, **characterized in that** the at least one ventilation channel (26, 26') runs through at least one of the body walls which forms a top (13) of the distributor and/or fire protection casing (10).

9. Kit for a distributor and/or fire protection casing (10), comprising a plurality of body walls (11, 12, 12', 13, 14, 15) and/or body wall elements that can be connected to one another, wherein at least one of the body walls (11, 12, 12', 13, 14, 15) and/or body wall elements is formed from a plate compound structure consisting of at least three plates, an outer plate of these plates being formed from at least one gypsum fiber board (1),
and the plate compound structure comprises at least one mineral fiber board (2) arranged on an inner side of the at least one gypsum fiber board (1) and at least one calcium silicate board (3) arranged on an inner side of the at least one mineral fiber board (2),
**characterized in that**
one of the body walls and/or body wall elements formed from the plate compound structure is formed as a door (11) to which a body wall (13), also formed from the plate compound structure, is adjacent, wherein these plate compound structures are formed in a step-like or stair-like manner at their ends, an upon exceeding a temperature threshold value automatically foaming-up inner seal (61) being located on a side edge of the calcium silicate board (3) of the door (11), an upon exceeding a temperature threshold value automatically foaming-up intermediate seal (62) being located on a side edge of the mineral fiber board (2) of the door (11), and an upon exceeding a temperature threshold value automatically foaming-up external seal (63) being located on a side edge of the gypsum fiber board (1) of the door (11).

10. Kit according to claim 9, **characterized in that** the kit comprises at least one bulkhead (25) which is inserted or can be inserted into the at least one of the body walls (11, 12, 12', 13, 14, 15) and/or body wall elements and/or is connected or can be connected to the at least one of the body walls (11, 12, 12', 13, 14, 15) and/or body wall elements and is formed from at least one mineral fiber board (4, 5).

11. Kit according to either claim 9 or 10, **characterized in that** a door seal is formed on the door (11), which door seal is formed from a combination of an inner smoke protection seal (71), an outer smoke protection seal (72) arranged offset thereto, and the three upon exceeding a temperature threshold value automatically foaming-up seals (61, 62, 63) that are arranged offset relative to one another, the inner automatically foaming-up seal (61) being arranged further inward than the inner smoke protection seal (71), the intermediate automatically foaming-up seal (62) being arranged between the inner smoke protection seal (71) and the outer smoke protection seal (72), and the outer automatically foaming-up seal (63) being arranged further outward than the outer smoke protection seal (72).

12. Kit according to one of the claims 9 to 11, **characterized in that** the at least one body wall(s) (11, 12, 12', 13, 14, 15) and/or body wall element(s) has at least one ventilation channel (26, 26') which passes through the plate compound structure or directly adjoins at least one plate of the plate compound structure, wherein in the inside and/or on the outside of which ventilation channel (26, 26') an upon exceeding a temperature threshold value automatically foaming-up material (6) is arranged.

13. Kit according to claim 12, **characterized in that** the wall thickness of the at least one body wall (11, 12, 12', 13, 14, 15) and/or body wall element where the at least one ventilation channel (26, 26') runs through the at least one body wall (11, 12, 12', 13, 14, 15) and/or body wall element is equal to the wall thickness of the at least one body wall (11, 12, 12', 13, 14, 15) and/or body wall element in the region of the plate compound structure, and the at least one ventilation channel (26) is arranged between the at least one gypsum fiber board (1) and the at least one calcium silicate board (3) of the plate compound structure.

14. Kit according to one of the claims 11 to 13, **characterized in that** the kit further comprises a fan (32), at least one foldable first smoke protection lip (35) and at least one foldable second smoke protection lip (36), and the at least one ventilation channel (26, 26') comprises at least one ventilation channel (26) that is connected or can be connected to the fan (32), between which ventilation channel (26, 26') and the fan (32) the at least one foldable first smoke protection lip (35) is or can be suspended, and at least one further ventilation channel (26') on the upper end of which the at least one foldable second smoke protection lip (36) rests or can be mounted.

15. The kit according to claim 11, **characterized in that** at least one ventilation channel (26, 26'), to which a fire-resistant ventilation shaft can be connected, passes through the at least one body wall (11, 12, 12', 13, 14, 15) and/or body wall element.

16. The kit according to one of the claims 11 to 15, **characterized in that** the at least one ventilation channel (26, 26') runs through at least one of the body walls which is provided as a top (13) of the distributor and/or fire protection casing (10).

## Revendications

1. Coffret de distribution électrique et/ou coupe-feu (10) avec un corps qui comprend au moins une paroi de corps (11, 12, 12', 13, 14, 15) qui est formée au moins partiellement d'un assemblage d'au moins trois plaques, au moins une de ces plaques qui forme une face extérieure du coffret de distribution électrique et/ou coupe-feu étant formée d'au moins une plaque fibres-gypse (1), et l'assemblage de plaques comprenant au moins une plaque de fibres minérales (2) étant agencée sur une face intérieure de l'au moins une plaque fibres-gypse (1) et au moins une plaque de silicate de calcium (3) étant agencée sur une face intérieure de l'au moins une plaque de fibres minérales (2) dirigée vers un espace intérieure (24) du coffret de distribution électrique et/ou coupe-feu,
**caractérisé en ce que**
l'une des parois de corps étant formées de l'assemblage de plaques forme une porte (11) qui est adjacente à une paroi de corps aussi formée de l'assemblage de plaques, ces assemblages de plaques étant conçus sous forme de marche ou d'escalier à leurs extrémités, un joint intérieure (61) qui mousse automatiquement quand une valeur seuil de température est dépassé étant disposé sur un bord latéral de la plaque de silicate de calcium (3) de la porte (11), un joint central (62) qui mousse automatiquement quand une valeur seuil de température est dépassé étant disposé sur un bord latéral de la plaque de fibres minérales (2) de la porte (11), et un joint extérieur (63) qui mousse automatiquement quand une valeur seuil de température est dépassé étant disposé sur un bord latéral de la plaque de fibres-gypse (1) de la porte (11).

2. Coffret de distribution électrique et/ou coupe-feu selon la revendication 1, **caractérisé en ce que** l'au moins une paroi de corps (11, 12, 12', 13, 14, 15) comprend un compartiment (25) qui est directement adjacent à l'assemblage de plaques ou est intégré dans l'assemblage de plaques, qui est formé d'au moins une plaque de fibres minérales (4, 5).

3. Coffret de distribution électrique et/ou coupe-feu selon l'une des revendications précédentes, **caractérisé en ce que** entre la porte (11) et une paroi de corps (13) adjacente qui est aussi formée de l'assemblage de plaques un joint de porte est formé qui est composé d'une combinaison d'un joint pare-fumée intérieur (71), un joint pare-fumée extérieur (72) agencé décalé l'un par rapport à l'autre, et les trois joints (61, 62, 63) qui sont agencés décalés les uns par rapport aux autres et qui moussent automatiquement quand une valeur seuil de température est dépassée, le joint intérieur (61) qui mousse automatiquement étant disposé plus à l'intérieur que le joint pare-fumée intérieur (71), le joint central (62) qui mousse automatiquement étant disposé entre le joint pare-fumée intérieur (71) et le joint pare-fumée extérieur (72), et le joint extérieur (63) qui mousse automatiquement étant disposé plus à l'extérieur que le joint pare-fumée extérieur (72).

4. Coffret de distribution électrique et/ou coupe-feu selon l'une des revendications précédentes, **caractérisé en ce que** l'au moins une paroi de corps (11, 12, 12', 13, 14, 15) comprend au moins un conduit de ventilation (26, 26') qui traverse l'assemblage de plaques, ou est directement adjacent à l'au moins une plaque de l'assemblage de plaques, un matériau (6) qui mousse automatiquement quand une valeur seuil de température est dépassée étant agencé à l'intérieur et/ou à l'extérieur.

5. Coffret de distribution électrique et/ou coupe-feu selon la revendication 4, **caractérisé en ce que** là ou l'au moins un conduit de ventilation (26, 26') traverse l'au moins une paroi de corps (11, 12, 12', 13, 14, 15), l'épaisseur de paroi de l'au moins une paroi de corps (11, 12, 12', 13, 14, 15) est égale à l'épaisseur de paroi de l'au moins une paroi de corps (11, 12, 12', 13, 14, 15 ) dans la zone de l'assemblage de plaques, et l'au moins un conduit de ventilation (26, 26') est agencé entre l'au moins une plaque fibres-gypse (1) et l'au moins une plaque de silicate de calcium (3) de l'assemblage de plaques.

6. Coffret de distribution électrique et/ou coupe-feu selon l'une des revendications 4 ou 5, **caractérisé en ce que** l'au moins un conduit de ventilation (26, 26') comprend au moins un conduit de ventilation (26) utilisé comme conduit d'air frais et relié à un ventilateur (32), au moins une première lèvre pare-fumée pliable (35) étant suspendue entre ledit conduit de ventilation (26) et le ventilateur (32), et au moins une deuxième lèvre pare-fumée pliable (36) reposant sur l'extrémité supérieure utilisée comme ouverture d'air pollué d'au moins un autre conduit de ventilation (26') utilisé comme conduit d'air pollué.

7. Dispositif de coupe-feu avec un coffret de distribution électrique et/ou coupe-feu (10) selon l'une des revendications 1 à 3, **caractérisé en ce que** au moins un conduit de ventilation (26, 26') traverse l'au moins une paroi de corps (11, 12, 12', 13, 14, 15) qui est relié à un système de ventilation qui débouche dans un espace séparé de l'espace dans lequel se trouve le coffret de distribution et/ou coupe-feu (10), en termes de protection contre les incendies.

8. Dispositif de coupe-feu selon la revendication 7, **caractérisé en ce que** l'au moins un conduit de ventilation (26, 26') traverse au moins une des parois de corps qui forme une couverture (13) du coffret de distribution électrique et/ou coupe-feu (10).

9. Kit pour un coffret de distribution électrique et/ou coupe-feu (10) comprenant plusieurs parois de corps (11, 12, 12', 13, 14, 15) et/ou éléments de paroi de corps interconnectables, au moins une des parois de corps (11, 12, 12', 13, 14, 15) et/ou des éléments de paroi de corps étant formés d'un assemblage de plaques d'au moins trois plaques, une plaque extérieur de ces plaques étant formé d'au moins une plaque fibres-gypse (1),
et l'assemblage de plaques comprenant au moins une plaque de fibres minérales (2) agencée sur une face intérieur de l'au moins une plaque fibres-gypse (1), et une plaque de silicate de calcium (3) agencée sur une face intérieur de l'au moins une plaque de fibres minérales (2),
**caractérisé en ce que**
l'une des parois de corps et/ou des éléments de paroi de corps formés de l'assemblage de plaques est formé sous forme d'une porte (11) à laquelle une paroi de corps (13) aussi formée de l'assemblage de plaques est adjacente, ces assemblages de plaques étant conçus comme des marches ou des escaliers à leurs extrémités, un joint intérieur (61) qui mousse automatiquement quand une valeur seuil de température est dépassée se trouvant sur un bord latéral de la plaque de silicate de calcium (3) de la porte (11), un joint central (62) qui mousse automatiquement quand une valeur seuil de température est dépassée se trouvant sur un bord latéral de la plaque de fibres minérales (2) de la porte (11), et un joint extérieur (63) qui mousse automatiquement quand une valeur seuil de température est dépassée se trouvant sur un bord latéral de la plaque fibres-gypse (1) de la porte (11).

10. Kit selon la revendication 9, **caractérisé en ce que** le kit comprend un compartiment (25) qui est intégré ou peut être intégré dans l'au moins une des parois de corps (11, 12, 12', 13, 14, 15) et/ou éléments de paroi de corps et qui est connecté ou peut être connecté à l'au moins une des parois de corps (11, 12, 12', 13, 14, 15) et/ou éléments de paroi de corps.

11. Kit selon la revendication 9 ou 10, **caractérisé en ce que** sur la porte (11) un joint de porte est formé qui est composé d'une combinaison d'un joint pare-fumée intérieur (71), un joint pare-fumée extérieur (72) agencé décalé l'un par rapport à l'autre, et les trois joints (61, 62, 63) qui sont agencés décalés les uns par rapport aux autres et qui moussent automatiquement quand une valeur seuil de température est dépassée, le joint intérieur (61) qui mousse automatiquement étant disposé plus à l'intérieur que le joint pare-fumée intérieur (71), le joint central (62) qui mousse automatiquement étant disposé entre le joint pare-fumée intérieur (71) et le joint pare-fumée extérieur (72), et le joint extérieur (63) qui mousse automatiquement étant disposé plus à l'extérieur que le joint pare-fumée extérieur (72).

12. Kit selon l'une des revendications 9 à 11, **caractérisé en ce que** l'au moins une paroi de corps (11, 12, 12', 13, 14, 15) comprend au moins un conduit de ventilation (26, 26') qui traverse l'assemblage de plaques ou est directement adjacent à au moins une plaque de l'assemblage de plaques, un matériau (6) qui mousse automatiquement quand une valeur seuil de température est dépassée, étant agencé à l'intérieur et/ou à l'extérieur.

13. Kit selon la revendication 12, **caractérisé en ce que** là ou l'au moins un conduit de ventilation (26, 26') traverse l'au moins une paroi de corps (11, 12, 12', 13, 14, 15), l'épaisseur de paroi de l'au moins une paroi de corps (11, 12, 12', 13, 14, 15) est égale à l'épaisseur de paroi de l'au moins une paroi de corps (11, 12, 12', 13, 14, 15 ) dans la zone de l'assemblage de plaques, et l'au moins un conduit de ventilation (26, 26') est agencé entre l'au moins une plaque fibres-gypse (1) et l'au moins une plaque de silicate de calcium (3) de l'assemblage de plaques.

14. Kit selon l'une des revendications 11 à 13, **caractérisé en ce que** le kit en plus comprend un ventilateur (32), au moins une première lèvre pare-fumée pliable (35) et une deuxième lèvre pare-fumée pliable (36) et l'au moins un conduit de ventilation (26, 26') comprend au moins un conduit de ventilation (26) qui est connecté ou peut être connecté au ventilateur (32), entre quel conduit de ventilation (26) et le ventilateur (32) au moins une première lèvre pare-fumée pliable (35) est suspendue ou peut être suspendue, et comprend au moins un autre conduit de ventilation (26') sur l'extrémité supérieur duquel l'au moins une deuxième lèvre pare-fumée pliable (36) repose ou peut être montée.

15. Kit selon la revendication 11, **caractérisé en ce que** au moins un conduit de ventilation (26, 26') traverse l'au moins une paroi de corps (11, 12, 12', 13, 14, 15) et/ou l'élément de paroi de corps qui peut être connecté à un puits d'aréage résistant au feu.

16. Kit selon la revendication 11 à 15, **caractérisé en ce que** l'au moins un conduit de ventilation (26, 26') traverse au moins une des parois de corps qui forme une couverture (13) du coffret de distribution électrique et/ou coupe-feu (10).
